# EUROPÄISCHE PATENTANMELDUNG

(11) **EP 2 653 514 A2**
(43) Veröffentlichungstag der Anmeldung: **23.10.2013**
(21) Anmeldenummer: 13001596.9
(22) Anmeldetag: 27.03.2013
(51) Int. Cl.: C09J 5/02

(54) **Füge- und/oder Verklebungsverfahren und auf diese Weise hergestellte Produkte**

(30) Priorität: 20.04.2012 DE 102012007786; 27.04.2012 DE 102012008402
(71) Anmelder: Jowat AG, 32758 Detmold (DE)
(72) Erfinder: Terfloth, Christian, Dr., D - 32760 Detmold (DE); Guse, Dieter, Dr., D - 32584 Löhne (DE); Starck, Felix, Dr., D - 32760 Detmold (DE)
(74) Vertreter: Von Rohr

(57) **Zusammenfassung**

Die Erfindung betrifft ein Verfahren zur Anbringung einer Kante, insbesondere Kunststoffkante, auf einen Werkstoff sowie die auf diese Weise erhaltenen Produkte und deren Verwendung.

## Beschreibung

Die vorliegende Erfindung betrifft das technische Gebiet der Kunststoff- bzw. Klebstofftechnologie, insbesondere die Verklebung von Kanten, insbesondere Kunststoffkanten, bzw. Kantenbändern.

Insbesondere betrifft die vorliegende Erfindung ein Verfahren zur Aufbringung von Kanten, insbesondere Kunststoffkanten, auf Werkstoffe sowie die auf diese Weise hergestellten Produkte und deren Verwendung.

Weiterhin betrifft die vorliegende Erfindung ein Verfahren zur Aufbringung von mittels Energieeintrag aktivierbaren Klebstoffschichten auf Kantenbänder.

Gleichermaßen betrifft die vorliegende Erfindung zudem Kantenbänder, welche auf mindestens einer Seite mit einer mittels Energieeintrag aktivierbaren Klebstoffschicht versehen sind.

Schließlich betrifft die vorliegende Erfindung die erfindungsgemäße Verwendung einer Zusammensetzung zur Ausrüstung eines Kantenbands mit einer Klebstoffschicht.

Im Stand der Technik ist eine Vielzahl von Methoden zur Anbringung von Kantenbändern auf die Schmalflächen insbesondere plattenförmiger Werkstücke bekannt.

Üblicherweise werden im Stand der Technik Kantenbänder in Durchlaufmaschinen, wie beispielsweise Kantenbearbeitungsmaschinen, mit Hilfe von Kantenanleimaggregaten auf den Schmalflächen plattenförmiger Werkstücke angebracht. Dabei ist es im Allgemeinen vorgesehen, die Werkstückschmalfläche unmittelbar vor dem Anfahren des Kantenbands mit einem Schmelzklebstoff, insbesondere sogenannten "Hotmelts", zu beaufschlagen.

Bei der Anbringung von Kantenbändern in Durchlaufmaschinen mit unmittelbar vor dem Anfahren des Kantenbands erfolgenden Schmelzklebstoffauftrag handelt es sich um ein kostengünstiges Verfahren, welches sich auch zur Herstellung größerer Stückzahlen eignet. Dennoch bringt dieses Verfahren eine Vielzahl von Nachteilen mit sich.

So ist das Aufschmelzen des Schmelzklebstoffs energieaufwendig und führt insgesamt zu einer Erhöhung der Betriebskosten; es vergeht beispielsweise bis zu einer halben Stunde, bis eine Betriebstemperatur von 150 bis 210 °C erreicht wird. Darüber hinaus wird Energie zur Beheizung des Klebstoffbehälters benötigt, um den Klebstoff während des gesamten Produktionsprozesses im flüssigen bzw. auftragungsfähigen Zustand zu halten. Der Klebstoffauftrag erfolgt üblicherweise durch Sprühen, Düsen, Walzen oder Rakeln auf das Werkstück.

Weiterhin erfordert das zuvor beschriebene Verfahren verhältnismäßig große Mengen des Klebstoffs. In der Folge wird die Klebstofffuge nach Verfestigung anfälliger für das Eindringen von Schmutz und Feuchtigkeit, so dass es im Laufe der Zeit einerseits zum Lösen der Verklebung kommen kann und andererseits die Klebstofffuge hinsichtlich ästhetischer Gesichtspunkte oftmals nicht zufriedenstellend ausgestaltet ist.

Auch führt der Einsatz des Klebstoffs in derart großen Mengen beim anschließenden Andrücken des Kantenbandes an das Werkstück zu einem Herausquellen von Klebstoff aus der Klebefuge, was zu Verschmutzungen sowohl des Werkstücks als auch der Verarbeitungsmaschine führt. Um dies zu verhindern, muss das Werkstück vor Verfahrensbeginn aufwendig und kostenintensiv mit Trennmitteln behandelt werden.

Im Übrigen sind auf diese Weise nur Schmelzklebstoffe mit relativ geringen Molekulargewichten und relativ hohen Schmelzindizes verarbeitbar, welche aber nicht immer zu den gewünschten Verklebungsqualitäten führen.

Aufgrund der zuvor geschilderten Nachteile dieses Verfahrens wird seit geraumer Zeit nach alternativen Möglichkeiten zur Anbringung von Kantenbändern auf Schmalflächen von plattenförmigen Werkstücken gesucht.

Andere Verfahren des Standes der Technik versuchen, diese Nachteile durch Bereitstellung von mit Klebstoff vorbeschichteten Kantenbändern zu vermeiden, welche die nachträgliche Anbringung an die Schmalfläche zu einem beliebigen Zeitpunkt nach dem Klebstoffauftrag ermöglichen. Bei vorbeschichteten Kantenbändern erfolgen Klebstoffauftrag auf das Kantenband und Anleimung an den Werkstoff getrennt voneinander. Üblicherweise muss dabei die Klebstoffschicht vor Anbringung des Kantenbands an den Werkstoff (re-)aktiviert bzw. aufgeschmolzen werden, um wieder im klebrigen bzw. klebefähigen Zustand vorzuliegen.

Die (Re-)Aktivierung bzw. das Aufschmelzen der Klebstoffschicht von vorbeschichteten Kantenbändern zur nachfolgenden Anbringung des Kantenbandes an einen Werkstoff erfolgt üblicherweise durch Plasmabehandlung, Heißluft, Infrarot-, UV-, Laser- oder Mikrowellenbestrahlung. Insbesondere bei der Verwendung von Laser- und Mikrowellenstrahlung ist es dabei im Allgemeinen üblich, dass die Klebstoffschicht zur Energieabsorption bzw. -umwandlung fähige Additive, wie beispielsweise mineralische Pigmente, enthält. Der (Re-)Aktivierungsprozess bzw. das Aufschmelzen der Klebstoffschicht ist jedoch mit zahlreichen Nachteilen verbunden.

Oftmals erfolgt nur ein nur schwach ausgeprägter bzw. schlecht steuerbarer Energietransfer auf den Klebstoff, so dass die Erwärmung verhältnismäßig langwierig bzw. unspezifisch ist. Darüber hinaus wird insbesondere aufgrund der schlechten Steuerbarkeit des Aktivierungsprozesses häufig das Kantenband selbst miterwärmt. Die ist jedoch der Qualität des Kantenbandes abträglich, da eine Erwärmung des Kantenbandes zu einer Materialschädigung führen kann, was wiederum in einer Einschränkung der Kantenbandmaterialien auf unempfindliche Materialien resultiert. Weiterhin sind die Additive, welche zur Energieabsorption und -umwandlung notwendig sind, insbesondere mineralische Pigmente, oftmals sehr kostenintensiv, was insgesamt zu einer Steigerung der Produktionskosten führt. Des Weiteren können solche Additive, insbesondere mineralische Pigmente, zu einer Verschlechterung des Klebverhaltens führen, insbesondere wenn sie in größeren Mengen eingesetzt werden; daher wird ihr Mengenanteil relativ niedrig gehalten, was aber eine homogene Einarbeitung und somit einen homogenen Energietransfer oftmals erschwert.

Zur Erzeugung von mit Klebstoff vorbeschichteten Kantenbändern sind verschiedene Verfahren im Stand der Technik bekannt. Zwar führen derartige Verfahren zu einer Verbesserung in Bezug auf die zuvor genannten Nachteile und ermöglichen insbesondere eine flexiblere Verfahrensführung, sind aber dennoch in vielfacher Hinsicht nicht zufriedenstellend, insbesondere in Bezug auf die zu verwendenden Polymere sowie die Reaktivierung der Klebstoffschicht.

Bei der Herstellung von vorbeschichteten Kantenbändern mittels Koextrusion werden diese im Allgemeinen im Rahmen von sogenannten Inline-Prozessen mit einer nachträglich aktivierbaren Kunststoff- oder Klebstoffschicht hergestellt, d. h. die Herstellung des Kantenbands einerseits und die Beaufschlagung mit Kunststoff oder Klebstoff andererseits erfolgen sozusagen zeitgleich. Koextrusionsverfahren bieten den Vorteil, dass sie aufgrund der hohen Temperaturen auch die Verarbeitung von Polymeren mit einem besonders hohem Molekulargewicht und geringem Schmelzindex ermöglichen. Mit derartigen Polymeren lassen sich besonders stabile Klebeverbindungen erzeugen.

Neben den zuvor genannten allgemeinen Nachteilen im Zusammenhang mit nachbeschichteten Kantenbändern ist speziell die Koextrusion darüber hinaus jedoch mit zahlreichen weiteren Nachteilen verbunden:
Koextrusionsverfahren erfordern besonders hohe Investitionen in Bezug auf die Produktionsanlage, da diese an den jeweiligen Prozess immer individuell angepasst werden muss. Diese Technologie ist somit nur für große Losgrößen bzw. Chargen wirtschaftlich.

Weiterhin sind derartige Verfahren auch in technischer Hinsicht mit zahlreichen Nachteilen verbunden. Denn bei Koextrusionsverfahren muss die direkte Verbindung von thermoplastischem Kantenband und Kunststoff- bzw. Klebstoffschicht ohne die Verwendung eines Haftvermittlers erfolgen. Aufgrund der fehlenden Haftvermittlerschicht kann folglich nur zwischen gleichartigen Materialien eine ausreichende Adhäsion erzielt werden. Auch ist der Einsatz von beispielsweise harzgetränkten Papierkanten oder Furnierkanten als Kantenband nicht möglich, da ausschließlich thermoplastische Materialien extrudierbar sind. Insgesamt besteht somit nur eine stark begrenzte Auswahl an Materialien bzw. eine begrenzte Auswahl an Materialkombinationen, welche zur Produktion von vorbeschichteten Kantenbändern mittels Koextrusion eingesetzt werden können.

Darüber hinaus ist es möglich, Kantenbänder im Rahmen von Offline-Prozessen mit einem Schmelzklebstoff bzw. Hotmelt zu beschichten. Bei diesen Verfahren wird zunächst das Kantenband als solches hergestellt und erst später, beispielsweise durch einen Lohnbeschichter oder einen Hersteller von Möbelteilen, mit einem nachträglich aktivierbaren Klebstoff beschichtet. Derartige Offline-Prozesse bieten insgesamt eine gute Flexibilität in Bezug auf die zu beschichtenden Kantenwerkstoffe und erlauben aufgrund der kostengünstigen Verfahrensführung auch die Ausrüstung kleiner Chargen bzw. Losgrößen.

Neben den zuvor geschilderten Problemen in Bezug auf die (Re-)Aktivierung ist aber die Herstellung nachbeschichteter Kantenbänder im Rahmen von Offline-Prozessen, mit weiteren Nachteilen verbunden:
Besonders problematisch ist, dass der Einsatz von Polymeren mit hohen Molekulargewichten und niedrigen Schmelzindizes nicht möglich ist, da die hierfür erforderlichen hohen Temperaturen nicht im Offline-Betrieb erreicht werden können. Zwar lassen sich im Rahmen derartiger Offline-Prozesse die Kantenbänder deutlich kostengünstiger beschichten, allerdings sind die resultierenden Klebeverbindungen den mittels Koextrusion hergestellten Kantenbändern in Bezug auf die Gebrauchseigenschaften unterlegen und lediglich mit der herkömmlichen Kantenanleimung mit thermoplastischen Hotmelts zu vergleichen, wie sie zuvor beschrieben wurde.

Vor diesem Hintergrund liegt daher der vorliegenden Erfindung die Aufgabe zugrunde, ein Verfahren zur Anbringung von Kantenbändern bereitzustellen, welches die zuvor geschilderten Nachteile des Standes der Technik zumindest weitgehend zu vermeiden oder aber wenigstens abzuschwächen imstande ist.

Insbesondere ist eine Aufgabe der vorliegenden Erfindung darin zu sehen, ein Verfahren zur Anbringung von Kanten, insbesondere Kunststoffkanten, auf Werkstücken bereitzustellen, welches die Erzeugung von in Bezug auf die (Re-)Aktivierung verbesserten Klebstoffschichten ermöglicht.

Darüber hinaus ist eine weitere Aufgabe der vorliegenden Erfindung darin zu sehen, ein Verfahren zur Anbringung von Kanten, insbesondere Kunststoffkanten, auf Werkstücken bereitzustellen, welches die Flexibilität von Nachbeschichtungsverfahren (insbesondere im Rahmen von Offline-Prozessen) besitzt, dabei dennoch die Erzeugung hochwertigerer Klebeverbindungen ermöglicht.

Zur Lösung des zuvor geschilderten Problems schlägt die vorliegende Erfindunggemäß einem ersten Aspekt der vorliegenden Erfindung - ein Verfahren zur Anbringung einer Kante, insbesondere Kunststoffkante, auf einem Werkstoff nach Anspruch 1 vor; weitere, insbesondere vorteilhafte Ausgestaltungen des erfindungsgemäßen Verfahrens sind Gegenstand der diesbezüglichen Unteransprüche.

Weiterhin betrifft die vorliegende Erfindung - gemäß einem zweiten Aspekt der vorliegenden Erfindung - einen nach dem erfindungsgemäßen Verfahren erhältlichen Werkstoff gemäß den diesbezüglichen unabhängigen Ansprüchen.

Weiterhin betrifft die vorliegende Erfindung - gemäß einem dritten Aspekt der vorliegenden Erfindung - die Verwendung eines erfindungsgemäßen Werkstoffs zur Herstellung von Möbeln gemäß dem diesbezüglichen unabhängigen Anspruch.

Zudem betrifft die vorliegende Erfindung - gemäß einem vierten Aspekt der vorliegenden Erfindung - ein Verfahren zur Aufbringung einer mittels Energieeintrag aktivierbaren Klebstoffschicht auf mindestens einer Seite eines Kantenbands gemäß dem diesbezüglichen unabhängigen Anspruch.

Weiterhin betrifft die vorliegende Erfindung - gemäß einem fünften Aspekt der vorliegenden Erfindung - ein Kantenband bzw. einen Kantenstreifen gemäß den diesbezüglichen unabhängigen Ansprüchen.

Schließlich betrifft die vorliegende Erfindung - gemäß einem sechsten Aspekt der vorliegenden Erfindung - die Verwendung einer Zusammensetzung, welche mindestens ein Klebstoffpolymer enthält, gemäß dem diesbezüglichen unabhängigen Anspruch.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in Bezug auf die übrigen Erfindungsaspekte entsprechend gelten.

Weiterhin versteht es sich von selbst, dass bei nachfolgenden Werte-, Zahlen- und Bereichsangaben die angegebenen Werte bzw. Bereiche nicht beschränkend zu verstehen sind; es versteht sich für den Fachmann, dass einzelfallbedingt oder anwendungsbezogen von den angegebenen Bereichen und Angaben abgewichen werden kann, ohne dass der Rahmen der vorliegenden Erfindung verlassen ist.

Zudem gilt, dass alle im Folgenden genannten Werte bzw. Parameterangaben oder dergleichen grundsätzlich mit genormten oder explizit angegebenen Bestimmungsverfahren oder aber mit dem Fachmann an sich geläufigen Bestimmungsmethoden bestimmt bzw. ermittelt werden können.

Dies vorausgeschickt wird im Folgenden die vorliegende Erfindung näher beschrieben.

Gegenstand der vorliegenden Erfindung ist somit - gemäß einem **ersten** Aspekt der vorliegenden Erfindung - ein Verfahren zur Anbringung einer Kante, insbesondere Kunststoffkante, auf einen Werkstoff, insbesondere ein Verfahren zur Anbringung eines Kantenbands (Kantenstreifens) auf mindestens eine Schmalfläche (Schmalseite) eines insbesondere plattenförmigen Werkstoffteils (Werkstücks), mittels Fügen und/oder mittels Verkleben, wobei
(a) zunächst das Kantenband auf seiner mit dem Werkstoff, insbesondere Werkstoffteil, zu verbindenden Seite mit einer mittels Energieeintrag aktivierbaren Klebstoffschicht (Kunststoffschicht) beaufschlagt und/oder versehen wird, wobei die mittels Energieeintrag aktivierbare Klebstoffschicht ausgehend von einer Dispersion oder Lösung mindestens eines Klebstoffpolymers in Abwesenheit eines energieabsorbierenden Additivs erhalten wird, wobei das Klebstoffpolymer ausgewählt ist aus Polyvinylacetaten, und
(b) nachfolgend das auf diese Weise mit der mittels Energieeintrag aktivierbaren Klebstoffschicht beaufschlagte und/oder versehene Kantenband unter Einwirkung von Energie auf mindestens eine Schmalfläche des Werkstoffteils angebracht wird, insbesondere dauerhaft mit mindestens einer Schmalfläche des Werkstoffteils verbunden und/oder verklebt wird.

In vollkommen überraschender Weise hat die Anmelderin gefunden, dass sich durch das Auftragen von Klebstoffen auf Basis von Polyvinylacetaten auf Kantenbänder ausgehend von Dispersionen oder Lösungen auch in Abwesenheit von energieabsorbierenden Additiven im Rahmen von Offline-Prozessen mit einer Klebstoffschicht vorbeschichtete Kantenbänder erzeugen lassen, deren Klebstoffschicht sich durch eine hervorragende (Re-)Aktivierbarkeit auszeichnet und welche nach dem Fügen bzw. Verkleben äußerst stabile Klebeverbindungen zum Werkstoffteil gewährleistet. Dies ist insofern überraschend, als nach dem Stand der Technik eine (Re-)Aktivierbarkeit nur dann gegeben ist, wenn zur Energieabsorption bzw. -umwandlung befähigte Additive, insbesondere mineralische Pigmente, in die Klebstoffschicht inkorporiert werden. Dass dies im Rahmen der vorliegenden Erfindung nicht erforderlich ist, sofern Klebstoffe auf Basis von Polyvinylacetaten eingesetzt werden, ist vollkommen überraschend und war in dieser Weise nicht vorhersehbar. Die vorliegende Erfindung kommt also ohne jedwede Anwesenheit energieabsorbierender Additive in der Klebstoff- bzw. Kunststoffschicht aus.

Wie zuvor geschildert, erfolgt die Anbringung der Kante, insbesondere Kunststoffkante, bzw. des Kantenbands auf den Werkstoff im Rahmen des erfindungsgemäßen Verfahrens mittels Fügen bzw. Verkleben. Unter dem Begriff des Fügens bzw. Verklebens werden im Rahmen der vorliegenden Erfindung insbesondere solche Methoden verstanden, welche den Zusammenhalt von zuvor separat vorliegenden Werkstücken (hier: Kante bzw. Kantenband einerseits und Werkstoff andererseits) ermöglichen, was wiederum in einem neuen Werkstück mit veränderter geometrischer Form (hier: Werkstoff mit angebrachter Kante bzw. Kantenband) resultiert. Im Besonderen werden erfindungsgemäß unter dem Begriff des Fügens stoffschlüssige Fügeverfahren verstanden, insbesondere Klebeverfahren.

Wie gleichermaßen zuvor beschrieben, wird im Rahmen des erfindungsgemäßen Verfahrens die Kante, insbesondere Kunststoffkante, bzw. das Kantenband mit einer mittels Energieeintrag aktivierbaren Klebstoffschicht ausgerüstet. Im Rahmen der vorliegenden Erfindung wird unter einer mittels Energieeintrag aktivierbaren Klebstoffschicht eine Schicht aus bzw. mit mindestens einem Klebstoff (Polymer) verstanden, welche durch Absorption von eingetragener Energie, beispielsweise durch Laserstrahlung, Mikrowellenstrahlung, IR-Strahlung, Wärmestrahlung, UV-Strahlung, Plasmastrahlung und dergleichen, mit nachfolgender Umwandlung der absorbierten Energie in Wärmeenergie aufgeschmolzen bzw. (re)aktiviert werden kann. Durch Umwandlung der absorbierten Energie in Wärmeenergie wird die Klebstoffschicht im Allgemeinen auf Temperaturen oberhalb ihres Erweichungs- bzw. Schmelzpunktes oder Schmelzbereichs erwärmt, so dass sie in einen klebefähigen bzw. klebrigen Zustand versetzt wird. Überraschenderweise ist es im Rahmen der vorliegenden Erfindung möglich, die Energieabsorption und -umwandlung ohne den Einsatz energieabsorbierender Additive, insbesondere ohne mineralische Pigmente (z. B. ohne Laseradditive), in der Klebstoffschicht zu ermöglichen. Wie die Studien der Anmelderin ergeben haben, gelingt dies nur, wenn als (re-)aktivierbarer Klebstoff ein Polyvinylacetat eingesetzt wird. Auf diese Art und Weise wird dann die Verklebung mit dem Werkstoff ermöglicht. Vorteilhafterweise erfolgt der Aktivierungs- bzw. Erwärmungsvorgang der Klebstoffschicht unmittelbar vor und/oder während dem Fügen bzw. Verkleben, damit Klebstoffschicht und Kantenband nicht übermäßig thermisch beansprucht werden.

Das erfindungsgemäße Verfahren besitzt eine Reihe von Vorteilen und Besonderheiten, welche es gegenüber den Verfahren des Standes der Technik auszeichnen:
Im Rahmen der vorliegenden Erfindung wird erstmals ein Verfahren realisiert, welches die Erzeugung von nachträglich aktivierbaren Klebstoffschichten auf Basis von Polyvinylacetaten mit hohem Molekulargewicht und geringem Schmelzindex, insbesondere von mittels Laser-, Wärme-, UV-, Mikrowellen-, IR- oder Plasmastrahlung aktivierbaren Klebstoffschichten auf Kantenbändern, ohne den Einsatz kostspieliger Additive zur Energieabsorption, insbesondere ohne mineralische Pigmente und dergleichen, ermöglicht. Trotz des Verzichts auf Additive der vorgenannten Art lässt sich ein zielgerichtetes und gleichmäßiges Aufschmelzen der Klebstoffschicht zur anschließenden Verklebung mit dem Werkstoff erzielen.

Die Abwesenheit bzw. der Verzicht energieabsorbierender Additive, insbesondere mineralischer Pigmente, hat zudem den Vorteil, dass eine Verbesserung der Verklebung erreicht wird, da keine störenden Additivpartikel die Verklebung verringern bzw. beeinträchtigen können.

Als besonders vorteilhaft im Zusammenhang mit der Aktivierung bzw. dem Aufschmelzen hat es sich zudem erwiesen, wenn die Dispersion bzw. die Lösung zur Aufbringung der Klebstoffschicht zusätzlich amphotere Moleküle mit hydrophobem und hydrophilem Molekülteil aufweist. Die Steuerbarkeit und Homogenität des Erwärmungsprozesses, insbesondere unter Einsatz von Mikrowellen-, IR-, UV-, Wärme-, Plasma- oder Laserstrahlung, wird auf diese Weise noch weiterführend verbessert, so dass es zu einer gleichmäßigen und vollflächigen Verklebung von Kantenband und Werkstoffteil kommen kann. Eine nur unvollständige Verklebung würde dagegen die Stabilität der Klebeverbindung negativ beeinträchtigen.

Darüber hinaus ist das erfindungsgemäße Verfahren dahingehend kostengünstig, als der apparative Aufwand bzw. die apparative Anpassung deutlich geringer ausfällt als bei den aus dem Stand der Technik bekannten Koextrusionsverfahren. Somit lohnt sich der Einsatz des erfindungsgemäßen Verfahrens auch bei kleineren Losgrößen bzw. kleineren Chargen, wohingegen die Koextrusion lediglich bei großtechnischem Einsatz mit hohen Stückzahlen ökonomisch sinnvoll ist.

Zudem werden mittels des erfindungsgemäßen Verfahrens die Vorteile der prozessual und ökonomisch vorteilhaften Offline-Prozesse einerseits sowie die Vorteile von Koextrusionsverfahren hinsichtlich der Qualität der Klebeverbindungen andererseits in einem einzelnen Prozess realisiert.

Weiterhin ist es auch möglich, aufgrund der vorgesehenen Trennung der Schritte von Beschichtung mit der Klebstoffschicht einerseits sowie Fügeverfahren andererseits eine individuelle Anpassung von Kantenband, Werkstoff und Klebstoff vorzunehmen. Dies ist oftmals in Bezug auf Dekor und die optische Ausgestaltung der Endprodukte relevant.

Zudem ermöglicht insbesondere die Aufbringung der Klebstoffpolymere auf Basis von Polyvinylacetaten ausgehend von Dispersionen bzw. Lösungen weiterhin den Einsatz besonders geringer Klebstoffmengen und einen homogenen Auftrag (z. B. durch Düsen, Sprühen, Rakeln, Walzen etc.), was in vielerlei Hinsicht vorteilhaft ist: Auf diese Weise kann verhindert werden, dass der Klebstoff aus der Klebefuge überquillt und eine aufwendige Vor- bzw. Nachbehandlung des Werkstücks bzw. eine Säuberung der Maschine erforderlich macht. Darüber hinaus können durch den geringeren Klebstoffeinsatz auch dünnere Klebefugen erzielt werden, welche auch als sogenannte "Nullfuge" bezeichnet werden und mit bloßem Auge nicht sichtbar sind.

Die zuvor genannten Vorteile sind insbesondere auf den erfindungsgemäßen Einsatz von Polyvinylacetaten ausgehend von Dispersionen oder Lösungen im Rahmen einer Nachbeschichtung des Kantenbandes in Abwesenheit von energieabsorbierenden Additiven, insbesondere mineralischen Pigmenten, in Verbindung mit den übrigen erfindungsgemäßen Maßnahmen zurückzuführen.

Im Zusammenhang mit den zuvor beschriebenen Vorteilen und Besonderheiten wird bereits an dieser Stelle auch auf die von der Anmelderin durchgeführten Ausführungsbeispiele verwiesen, welche die vorgenannten Effekte in eindrucksvoller Weise belegen und nachfolgend noch detailliert beschrieben sind.

Die vorliegende Erfindung kann in vielfältiger Weise ausgestaltet sein, wobei bevorzugte Ausführungsformen nachfolgend zum besseren Verständnis ausführlich geschildert sind.

Im Allgemeinen kann bei der Durchführung des erfindungsgemäßen Verfahrens als Kante, insbesondere Kantenband, ein Kantenband aus einem thermoplastischen oder duroplastischen Kunststoff oder aus Holz oder aus Papier oder Pappe oder aus Metallen, insbesondere ein Kantenband aus einem thermoplastischen oder duroplastischen Kunststoff, vorzugsweise ein Kantenband aus einem thermoplastischen Kunststoff, eingesetzt werden.

Als erfindungsgemäß besonders gut geeignete Materialien für den Einsatz als Kante, insbesondere Kantenband, haben sich (i) Polyolefine, bevorzugt Polyethylen (PE) oder Polypropylen (PP); (ii) Polymethacrylate (PMA); (iii) Polymethylmethacrylate (PMMA); (iv) Polyvinylchlorid (PVC); (v) Polyvinylidenhalogenid, insbesondere Polyvinylidenfluorid (PVDF) oder Polyvinylidenchlorid (PVDC); (vi) Acrylnitril/Butadien/Styrol-Copolymere (ABS); (vii) Polyamide (PA), Polycarbonate (PC); (viii) Melamin-Formaldehydharze; (ix) Epoxidharze; (x) Phenolharze oder (xi) Harnstoffharze erwiesen.

Dabei ist es als besonders vorteilhaft anzusehen, dass mittels des erfindungsgemäßen Verfahrens, insbesondere aufgrund des Polymerauftrags aus der Dispersion oder Lösung sowie der materialschonenden Aktivierung mittels UV-, Wärme-, IR-, Plasma-, Mikrowellen- oder Laserstrahlung, eine deutlich vielfältigere Auswahl der eingesetzten Materialien zur Bereitstellung der Kanten, insbesondere Kunststoffkanten, bzw. Kantenbänder gegeben ist. Im Rahmen der vorliegenden Erfindung ist es im Gegensatz zu Koextrusionsverfahren möglich, Kantenbänder auch auf Basis von Holz, Papier oder Pappe oder Metallen, wie z. B. Aluminium, einzusetzen.

Was den Werkstoff als solchen anbelangt, so ist es erfindungsgemäß üblicherweise vorgesehen, dass als Werkstoff, insbesondere als plattenförmiges Werkstoffteil, Holz, Holzersatzstoffe, Kunststoffe oder Glas oder Metallen, vorzugsweise Holz oder Holzersatzstoffe, eingesetzt werden.

Unter dem Begriff der Holzersatzstoffe werden im Rahmen des erfindungsgemäßen Verfahrens insbesondere Holzfaserwerkstoffe verstanden. Üblicherweise handelt es sich bei Holzfaserwerkstoffen um solche Werkstoffe, welche Holzfasern als Bestandteil enthalten, wie beispielsweise Spanplatten, MDF-Platten (*Medium-Density-Fiber-Boards* bzw. mitteldichte Faserplatten) oder OSB-Platten (O*riented Strand-Boards* bzw. Grobspanplatten). Es kann jedoch auch vorgesehen sein, dass Holzersatzstoffe auf Basis von Kunststoffen eingesetzt werden, wobei alle Kunststoffe, welche auch im Zusammenhang mit den Kantenbändern genannt werden, in Betracht kommen.

Zur Vorbereitung der Oberfläche der Kante für den Klebstoff bzw. die Klebstoffschicht, insbesondere zur Erhöhung der Adhäsion bzw. Haftung, ist es erfindungsgemäß bevorzugt, wenn die Kante, insbesondere das Kantenband, vor Beaufschlagung mit der Dispersion oder Lösung des Klebstoffpolymers mit einem Haftvermittler (Primer) versehen und/oder beschichtet wird. Alternativ kann es stattdessen aber auch vorgesehen sein, die Kante, insbesondere Kunststoffkante, einer Oberflächenbehandlung und/oder Oberflächenaktivierung, vorzugsweise mittels Coronabehandlung oder Plasmabehandlung, zu unterziehen.

Die Oberfläche der Kante, insbesondere Kunststoffkante, kann somit durch den Einsatz von zwei verschiedenen alternativen Verfahren (d. h. Haftvermittlerauftrag oder Vorbehandlung) auf den Klebstoff vorbereitet werden, insbesondere zur Verbesserung der Affinität des Klebstoffs zur Kante bzw. zum Kantenband.

Was den Haftvermittler als solchen anbelangt, so kann dieser vorzugsweise aus der Gruppe von Polymerlösungen oder Polymerdispersionen, insbesondere lösemittelhaltigen oder vorzugsweise wässrigen Polymerdispersionen, vorzugsweise Polyurethan(PU)-Dispersionsklebstoffen, ausgewählt werden. Gemäß einer besonders bevorzugten Ausführungsform können gleichermaßen als Haftvermittler vorzugsweise wässrige Polymerdispersionen eingesetzt werden, welche insbesondere aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie Mischungen aus zwei oder mehreren der vorgenannten Dispersionen ausgewählt sind. Besonders bevorzugt wird im Rahmen des erfindungsgemäßen Verfahrens als Haftvermittler eine wässrige Polymerdispersion auf Basis einer insbesondere wässrig basierten Polyurethandispersion eingesetzt.

Was die in Verfahrensschritt (a) eingesetzte Dispersion oder Lösung des Klebstoffpolymers anbelangt, so kann diese in vielfältiger Art und Weise ausgestaltet sein.

So ist es im Rahmen des erfindungsgemäßen Verfahrens möglich, dass die in Verfahrensschritt (a) eingesetzte Dispersion oder Lösung des Klebstoffpolymers zur Beaufschlagung der Kante, insbesondere des Kantenbands, mit einer mittels Energieeintrag aktivierbaren Klebstoffschicht wässrig-basiert oder organisch-basiert, vorzugsweise wässrig-basiert, ausgebildet ist.

Der Auftrag der erfindungsgemäß eingesetzten Polyvinylacetate als Klebstoffpolymere ausgehend von Lösungen oder Dispersionen ermöglicht erstmals die Erzeugung qualitativ hochwertiger Klebeverbindungen auf Polyvinylacetatbasis, wie sie üblicherweise im Stand der Technik ausschließlich mittels Koextrusion erzielt werden, und dies auch im Rahmen von Nachbeschichtungen, insbesondere Offline-Prozessen, da ein derartiger Auftrag auch den Einsatz von sonst nur mittels Koextrusion verarbeitbaren Polymeren, insbesondere Polymeren mit hohen Molekulargewichten und/oder geringen Schmelzindizes, erlaubt.

Gemäß einer besonders bevorzugten Ausführungsform der vorliegenden Erfindung kann es vorgesehen sein, dass das Klebstoffpolymer ein mittleres Molekulargewicht, insbesondere gewichtsmittleres Molekulargewicht (Mw), von mindestens 70.000 g/mol, insbesondere mindestens 85.000 g/mol, vorzugsweise mindestens 100.000 g/mol, aufweist.

Insbesondere kann es vorgesehen sein, dass das Klebstoffpolymer ein mittleres Molekulargewicht, insbesondere gewichtsmittleres Molekulargewicht (Mw), im Bereich von 70.000 g/mol bis 10.000.000 g/mol, insbesondere im Bereich von 85.000 g/mol bis 5.000.000 g/mol, vorzugsweise im Bereich von 100.000 g/mol bis 3.000.000 g/mol, bevorzugt im Bereich von 150.000 g/mol bis 2.000.000 g/mol, besonders bevorzugt im Bereich von 175.000 g/mol bis 1.500.000 g/mol, ganz besonders bevorzugt im Bereich von 200.000 g/mol bis 1.000.000 g/mol, aufweist.

Insbesondere kann es gemäß einer bevorzugten Ausführungsform der vorliegenden Erfindung weiterhin vorgesehen sein, dass das Klebstoffpolymer bei einer Temperatur von 190 °C und einer Last von 2,16 kg einen Schmelzindex (d. h. synonym auch als Schmelzfließindex bzw. Schmelzflussindex bzw. Schmelze-Massefließrate bzw. MFR bezeichnet), insbesondere bestimmt nach ISO 1133, von höchstens 50 g/10 min, insbesondere höchstens 30 g/10 min, vorzugsweise höchstens 25 g/10 min, aufweist. Insbesondere ist es in diesem Zusammenhang bevorzugt, wenn das Klebstoffpolymer bei einer Temperatur von 190 °C und einer Last von 2,16 kg einen Schmelzindex, insbesondere bestimmt nach ISO 1133, im Bereich von 0,01 g/10 min bis 50 g/10 min, insbesondere im Bereich von 0,1 g/10 min bis 30 g/10 min, vorzugsweise im Bereich von 0,2 g/10 min bis 25 g/10 min, bevorzugt im Bereich von 0,3 g/10 min bis 20 g/10 min, aufweist.

Der Schmelzindex (synonym auch als Schmelzfließindex bzw. Schmelzflussindex bzw. Schmelze-Massefließrate bzw. MFR bezeichnet) dient insbesondere zur Charakterisierung des Fließverhaltens von Thermoplasten bei definierten Druck- und Temperaturbedingungen. Dieser Parameter dient insbesondere als Maß der Viskosität der Kunststoff- bzw. Klebstoffschmelze. Nach ISO 1133 : 2005 erfolgt die Bestimmung des Schmelzindexes insbesondere mittels Kapillarrheometer.

Durch den Einsatz von Klebstoffpolymeren bzw. Polyvinylacetaten mit den vorgenannten Molekulargewichten einerseits und/oder mit einem Schmelzindex im zuvor beschriebenen Bereich andererseits lassen sich besonders stabile und hochwertige Klebeverbindungen in Bezug auf die Anbringung von Kantenbändern an Werkstoffteilen erzielen. Die Verarbeitung derartiger Polyvinylacetate war bislang ausschließlich im Rahmen von kostenintensiven und technisch aufwendigen Koextrusionsverfahren möglich. In den aus ökonomischer und technischer Hinsicht vorteilhaften Nachbeschichtungs- bzw. Offline-Prozessen konnten bislang im Allgemeinen nur Schmelzklebstoffe auf Basis von Polymeren mit geringeren Molekulargewichten und höheren Schmelzindizes verwendet werden, was allerdings in schlechteren Klebeeigenschaften resultiert. Der Einsatz derartiger Polyvinylacetate auch in Nachbeschichtungsverfahren (insbesondere auch in Offline-Prozessen) ist somit erstmals im Rahmen des erfindungsgemäßen Verfahrens gelungen, insbesondere aufgrund der in vollkommen überraschender Weise realisierten Aufbringung der Polymere ausgehend von Dispersionen bzw. Lösungen.

Was die Menge des eingesetzten Klebstoffpolymers anbelangt, so kann diese Menge in weiten Bereichen variieren: Im Rahmen der vorliegenden Erfindung ist es bevorzugt, wenn die in Verfahrensschritt (a) eingesetzte Dispersion oder Lösung das Klebstoffpolymer in einer Menge im Bereich von 5 bis 90 Gew.-%, insbesondere 10 bis 80 Gew.-%, vorzugsweise 15 bis 70 Gew.-%, bevorzugt 17,5 bis 65 Gew.-%, besonders bevorzugt 20 bis 60 Gew.-%, ganz besonders bevorzugt 25 bis 55 Gew.-%, bezogen auf die Dispersion oder Lösung, aufweist.

Überraschenderweise hat sich im Rahmen des erfindungsgemäßen Verfahrens zudem gezeigt, dass sich die Aktivierung der Klebstoffschicht unter Energieeintrag verbessern lässt, wenn die in Verfahrensschritt (a) eingesetzte Dispersion oder Lösung amphotere Moleküle mit hydrophobem und hydrophilem Molekülteil, insbesondere Kolloide, vorzugsweise Schutzkolloide, aufweist. In diesem Zusammenhang ist es besonders bevorzugt, wenn diese Moleküle aus (i) vinylgruppenhaltigen Polymeren, insbesondere Ethylen-Vinylalkohol-Copolymeren, Polyvinylacetaten, Polyvinylalkoholen, Polyvinylpyrrolidonen sowie deren Mischungen; (ii) Celluloseethern, insbesondere Methylcellulose, Hydroxyethylcellulose, Hydroxypropylmethylcellulose sowie deren Mischungen; (iii) Polyacrylaten; (iv) Polysacchariden, insbesondere Stärke, Alginaten sowie deren Mischungen; (v) Proteinen, insbesondere Gelatine, sowie Mischungen der vorgenannten Polymere ausgewählt sind. Als besonders geeignet hat sich der Einsatz von Ethylen-Vinylalkohol-Copolymeren erwiesen.

Durch den Einsatz der vorgenannten amphoteren Moleküle lässt sich die Verklebung zwischen Kantenband einerseits und Werkstoff andererseits hinsichtlich ihrer Gleichmäßigkeit und Homogenität noch weitergehend verbessern, insbesondere da auf diese Weise eine noch zielgerichtetere und genauere (Re-)Aktivierung bzw. ein präziseres und noch besser kontrollierbares Aufschmelzen der Klebstoffschicht durchgeführt werden kann. Zudem bewirken die amphoteren Moleküle eine Stabilisierung der eingesetzten Dispersion bzw. Lösung, insbesondere sozusagen in der Art eines Emulgators oder Dispergierhilfsmittels, wobei jedoch im Unterschied zu herkömmlichen Emulgatoren oder Dispergierhilfsmitteln keine Wasserlöslichkeit bzw. Wassersensibilität auftritt.

Die Menge der eingesetzten amphoteren Moleküle kann in weiten Bereichen variieren. Üblicherweise ist es im Rahmen der vorliegenden Erfindung vorgesehen, dass die in Verfahrensschritt (a) eingesetzte Dispersion oder Lösung die amphoteren Moleküle mit hydrophobem und hydrophilem Molekülteil in einer Menge im Bereich von 0,001 bis 20 Gew.-%, insbesondere im Bereich von 0,01 bis 15 Gew.-%, vorzugsweise im Bereich von 0,1 bis 10 Gew.-%, bevorzugt im Bereich von 0,5 bis 9 Gew.-%, besonders bevorzugt im Bereich von 1 bis 7 Gew.-%, ganz besonders bevorzugt im Bereich von 1,5 bis 5 Gew.-%, bezogen auf die Dispersion oder Lösung, aufweist.

In vollkommen überraschender Weise hat sich im Rahmen der vorliegenden Erfindung zudem gezeigt, dass die mit dem erfindungsgemäßen Verfahren hergestellte Klebstoffschicht bzw. Kunststoffschicht auch ohne den Einsatz energieabsorbierender kostenintensiver Additive mittels Energieeintrag (z. B. Laser-, UV-, Wärme-, Plasma-, IR- bzw. Mikrowellenbestrahlung) aufschmelzbar bzw. (re-)aktivierbar ist. Somit ist es im Rahmen der vorliegenden Erfindung üblicherweise vorgesehen, dass die in Verfahrensschritt (a) eingesetzte Dispersion oder Lösung kein energieabsorbierendes Additiv, insbesondere kein Wärmestrahlung absorbierendes und/oder kein IR-Strahlung absorbierendes und/oder kein Mikrowellenstrahlung absorbierendes und/oder kein Laserstrahlung absorbierendes und/oder kein Plasmastrahlung absorbierendes Pigment bzw. Additiv, aufweist.

Dies ist umso überraschender, als in den Klebstoffsystemen des Standes der Technik die Anwesenheit energieabsorbierender Additive zwingend erforderlich ist, um eine (Re-)Aktivierung unter Energieeinstrahlung überhaupt zu ermöglichen. Denn derartige energieabsorbierende Additive sind imstande, Energie reversibel zu absorbieren, in Wärmeenergie umzuwandeln und an die Umgebung freizusetzen, was in einer Temperaturerhöhung der Umgebung resultiert. Im Rahmen üblicher (Re-)Aktivierungsprozesse von Klebstoffschichten zur Anbringung von Kantenbändern an Werkstoffteile gemäß dem Stand der Technik wird auf diese Art und Weise die Klebstoffschicht auf Temperaturen oberhalb ihres Erweichungs- oder Schmelzpunktes bzw. Schmelzbereichs erreicht, wodurch die Klebstoffschicht in einen klebefähigen bzw. klebrigen Zustand versetzt wird. Bei derartigen energieabsorbierenden Additiven handelt es sich im Allgemeinen um mineralische Pigmente bzw. Additive, welche üblicherweise in der Klebstoffschicht vorliegen. Wie bereits zuvor beschrieben, sind derartige Additive mit verhältnismäßig hohen Kosten verbunden, was ihren Einsatz nachteilig macht.

Insgesamt war es im Rahmen des erfindungsgemäßen Verfahrens somit vollkommen überraschend, dass bei Auftrag von Klebstoffpolymeren auf Basis von Polyvinylacetaten ausgehend von Lösungen oder Dispersionen auch ohne den Einsatz derartiger energieabsorbierender Additive eine gut steuerbare Energieübertragung zum Aufschmelzen der Klebstoffschicht erfolgt. Dies ist mit anderen Klebstoffpolymeren nicht möglich, wie Studien der Anmelderin ergeben haben.

Was die Ausgestaltung der in Verfahrensschritt (a) eingesetzten Dispersion oder Lösung weiterhin anbelangt, so ist es bevorzugt, wenn diese wässrig basiert ausgebildet ist. Dabei kann es insbesondere vorgesehen sein, dass die in Verfahrensschritt (a) eingesetzte Dispersion oder Lösung auf einen zumindest im Wesentlichen neutralen pH-Wert, insbesondere einen pH-Wert im Bereich von 6,0 bis 8,0, vorzugsweise im Bereich von 6,5 bis 7,5, aufweist. Dabei ist es bevorzugt, wenn die in Verfahrensschritt (a) eingesetzte Dispersion oder Lösung mindestens ein pH-Stellmittel enthält.

Durch die Einstellung des pH-Werts auf einen weitgehend neutralen pH-Wert wird die Stabilität der Lösung bzw. Dispersion während der Verarbeitung gewährleistet. Darüber hinaus wird auf diese Weise jedoch auch die Verfahrensführung vereinfacht, da der Einsatz von Lösungen bzw. Dispersionen mit weitgehend neutralem pH-Wert sowohl in Bezug auf den Personenschutz als auch in Bezug auf die Beanspruchung der eingesetzten Maschinen vorteilhaft ist. Die Einstellung des pH-Werts erfolgt mit dem Fachmann wohlbekannten pH-Stellmittein.

Um die Kantenbänder mit besonders gleichmäßig dicken Klebstoffschichten zu versehen, kann es im Rahmen der vorliegenden Erfindung zudem vorgesehen sein, dass die in Verfahrensschritt (a) eingesetzte Dispersion oder Lösung außerdem mindestens ein Filmbildungshilfsmittel und/oder mindestens einen Filmbildner enthält. Dabei ist es besonders bevorzugt, das Filmbildungshilfsmittel bzw. den Filmbildner in Mengen im Bereich von 0,001 bis 6 Gew.-%, insbesondere im Bereich von 0,01 bis 5 Gew.-%, vorzugsweise im Bereich von 0,01 bis 4 Gew.-%, bevorzugt im Bereich von 0,05 bis 3,5 Gew.-%, besonders bevorzugt im Bereich von 0,1 bis 3 Gew.-%, bezogen auf die Dispersion oder Lösung, einzusetzen. Durch den Einsatz eines Filmbildungshilfsmittels bzw. Filmbildners wird ermöglicht, dass eine flächendeckende Verfilmung der Oberfläche des Kantenbandes mit der Dispersion bzw. Lösung des Klebstoffpolymers auf Basis von Polyvinylacetaten erfolgt. Auf diese Weise wird eine besonders stabile und homogene Verklebung sichergestellt, da die Oberfläche des Kantenbandes vollflächig mit der Klebstoffdispersion bedeckt ist. Geeignete Filmbildner bzw. Filmbildungshilfsmittel für den Einsatz in den Dispersionen bzw. Lösungen sind dem Fachmann an sich bekannt; so ist es beispielsweise möglich, handelsübliche Filmbildner, wie Propylencarbonat oder Butyldiglykolacetat, einzusetzen.

Darüber hinaus kann es erfindungsgemäß vorgesehen sein, dass die in Verfahrensschritt (a) eingesetzte Dispersion oder Lösung außerdem mindestens ein weiteres Additiv und/oder mindestens einen weiteren Hilfsstoff enthält. Das weitere Additiv bzw. der weitere Hilfsstoff kann insbesondere aus der Gruppe von Dispergierhilfsmitteln, Emulgatoren, Füllstoffen, Entschäumern, Farbstoffen, Färbemitteln, Vergilbungsinhibitoren, Antioxidationsmitteln, Stabilisatoren, Konservierungsmitteln, UV-Stabilisatoren, Verlaufsmitteln, Rheologiemodifikatoren, Viskositätsregulatoren, Verdickungsmitteln sowie deren Mischungen und Kombinationen ausgewählt werden.

Der Einsatz der vorgenannten Additive und Hilfsstoffe sowie gegebenenfalls weiterer, an dieser Stelle nicht ausdrücklich erwähnter üblicher Additive ist dem Fachmann an sich bekannt. Auch die Bestimmung der erforderlichen einzusetzenden Mengen liegt im üblichen Handeln des Fachmanns.

Die Aufbringung der Dispersion oder Lösung des Klebstoffpolymers erfolgt ebenfalls durch dem Fachmann als solche wohlbekannte technische Verfahren. So ist es im Rahmen der vorliegenden Erfindung besonders bevorzugt, wenn in Verfahrensschritt (a) zum Erhalt einer mittels Energieeintrag aktivierbaren Kunststoffschicht das Kantenband mit der Dispersion oder Lösung des Klebstoffpolymers durch Beschichtungsverfahren, insbesondere durch thermisches, chemisches, mechanisches oder thermomechanisches Beschichten, vorzugsweise durch Rakeln, Walzen, Düsen, Sprühauftrag, Spritzen oder Plastifizieren, beaufschlagt und/oder versehen wird.

Das erfindungsgemäße Verfahren zeichnet sich zudem unter anderem dadurch aus, dass nur verhältnismäßig geringe Mengen des Klebstoffpolymers für eine stabile Verklebung notwendig sind. So ist es im Rahmen des erfindungsgemäßen Verfahrens üblicherweise vorgesehen, dass in Verfahrensschritt (a) die Dispersion oder Lösung des Klebstoffpolymers in einer Auftragsmenge von höchstens 300 g/m², insbesondere höchstens 200 g/m², vorzugsweise höchstens 150 g/m², aufgetragen wird. Insbesondere kann es vorgesehen sein, in Verfahrensschritt (a) die Dispersion oder Lösung des Klebstoffpolymers in einer Auftragsmenge im Bereich von 1 bis 300 g/m², insbesondere im Bereich von 5 bis 200 g/m², bevorzugt im Bereich von 10 bis 150 g/m², aufzutragen. Wie zuvor bereits geschildert, ist der Einsatz der Dispersion bzw. Lösung des Klebstoffpolymers in den vorgenannten Auftragsmengen mit zahlreichen Vorteilen verbunden. Insbesondere wird auf diese Weise ein Herausquellen des Klebstoffpolymers aus der Fuge verhindert. Weiterhin führt der Einsatz von geringen Klebstoffmengen auch zu geringeren Dicken der Klebstofffuge, wodurch insbesondere eine Verbesserung der Optik, aber darüber hinaus auch der Haltbarkeit der resultierenden Klebeverbindung erzielt wird. Dennoch genügen die vorgenannten Auftragsmengen für eine zuverlässige und stabile Verklebung.

Was konkret die Verfahrensführung anbelangt, so kann es vorgesehen sein, dass Verfahrensschritt (a) kontinuierlich, insbesondere als Durchlaufverfahren, oder aber stationär, vorzugsweise als Durchlaufverfahren, betrieben wird.

Im Rahmen der vorliegenden Erfindung ist unter einem Durchlaufverfahren insbesondere ein Verfahren für den maschinellen Durchlauf zu verstehen. Dabei werden die Kanten, insbesondere Kunststoffkanten, bzw. Kantenbänder in einem kontinuierlichen Fluss, beispielsweise mit einem Förderband oder einer Fließbandeinrichtung, zu der Beschichtungseinrichtung transportiert, dort mit der Dispersion bzw. Lösung des Klebstoffpolymers versehen und verlassen schließlich die Einrichtung in einem kontinuierlichen Fluss von mit der Klebstoffschicht versehenen Kantenbändern.

Im Gegensatz hierzu wird ein stationäres Verfahren an einer im Allgemeinen mobilen Bearbeitungseinrichtung durchgeführt. Hierzu werden die Kantenbänder einzeln zu der Bearbeitungsstation transportiert, dort beschichtet bzw. mit der Klebstoffschicht versehen und anschließend einzeln wieder abtransportiert.

Gemäß einer bevorzugten Ausführungsform wird Verfahrensschritt (a) des erfindungsgemäßen Verfahrens als Durchlaufverfahren betrieben, vorzugsweise in kontinuierlichem Betrieb.

Der Vorschub, mit dem Verfahrensschritt (a) des erfindungsgemäßen Verfahrens durchgeführt wird, kann im Rahmen der vorliegenden Erfindung in weiten Bereichen variieren. Im Allgemeinen wird Verfahrensschritt (a) als Durchlaufverfahren mit einem Vorschub von mindestens 1 m/min, insbesondere mindestens 5 m/min, vorzugsweise mindestens 10 m/min, bevorzugt mindestens 15 m/min, besonders bevorzugt mindestens 20 m/min, durchgeführt. Insbesondere kann es vorgesehen sein, dass Verfahrensschritt (a) als Durchlaufverfahren mit einem Vorschub im Bereich von 1 bis 100 m/min, insbesondere im Bereich von 5 bis 75 m/min, vorzugsweise im Bereich von 10 bis 60 m/min, bevorzugt im Bereich von 15 bis 50 m/min, besonders bevorzugt im Bereich von 20 bis 40 m/min, durchgeführt wird.

Weiterhin ist es im Rahmen des erfindungsgemäßen Verfahrens üblich, dass in Verfahrensschritt (a) nach der Beaufschlagung des Kantenbands mit der Dispersion oder Lösung des Klebstoffpolymers das Dispersionsmedium oder Lösemittel entfernt wird. Vorzugsweise erfolgt die Entfernung des Lösemittels bzw. Dispersionsmediums mittels Trocknung und/oder Verdampfen bei Raumtemperatur, insbesondere bei 25 °C, oder bei erhöhten Temperaturen und/oder bei Atmosphärendruck oder reduziertem Druck. Auf diese Weise soll insbesondere eine nichtklebrige bzw. klebefreie, dennoch mittels Energieeintrag aktivierbare bzw. verklebbare Kunststoffschicht und/oder Klebstoffschicht erhalten werden. In diesem Zusammenhang ist unter den Begriffen "nichtklebrig" bzw. "klebefrei" ein Zustand der Klebstoff- bzw. Kunststoffschicht zu verstehen, welcher vorsieht, dass bei Raumtemperatur (d. h. 25 °C) und Atmosphärendruck keine Haftung bzw. Verklebung erfolgt; erst nach Aktivierung mittels Energieeintrag soll dagegen die Klebstoffschicht bzw. die Kunststoffschicht ihre adhäsiven bzw. klebrigen bzw. verklebungsfähigen Eigenschaften, welche die Anbringung des Kantenbandes an den Werkstoff erlauben, entwickeln. Vorteilhafterweise ist keine Trennfolie zum Schutz der Klebstoffschicht erforderlich.

Die resultierende getrocknete bzw. lösemittelfreie Kunststoffschicht bzw. Klebstoffschicht weist im Vergleich zum Stand der Technik darüber hinaus geringe Dicken auf. So ist es im Rahmen der vorliegenden Erfindung insbesondere vorgesehen, dass die aus Verfahrensschritt (a) resultierende, mittels Energieeintrag aktivierbare Kunststoffschicht und/oder Klebstoffschicht eine Dicke von höchstens 200 µm, insbesondere höchstens 150 µm, vorzugsweise höchstens 100 µm, aufweist. Insbesondere ist es erfindungsgemäß bevorzugt, wenn die aus Verfahrensschritt (a) resultierende, mittels Energieeintrag aktivierbare Kunststoffschicht und/oder Klebstoffschicht eine Dicke im Bereich von 0,1 bis 200 µm, insbesondere im Bereich von 0,5 bis 150 µm, vorzugsweise im Bereich von 1 bis 100 µm, aufweist.

Wie die vorstehenden Dicken zeigen, wird im Rahmen der vorliegenden Erfindung realisiert, dass das resultierende Produkt, d. h. das mit einem Kantenband beaufschlagte Werkstoffteil, nur eine äußerst geringe Fuge aufweist. Neben den verbesserten ästhetischen Aspekten ist eine solche "Nullfuge" auch wesentlich weniger anfällig für das Eindringen von Feuchtigkeit und Schmutz, so dass die Verklebung und damit auch die Werkstücke eine sehr viel höhere Lebensdauer besitzen.

Was die Beschaffenheit der Kunststoff- bzw. Klebstoffschicht weiterhin anbelangt, so ist es üblicherweise vorgesehen, dass die aus Verfahrensschritt (a) resultierende, mittels Energieeintrag aktivierbare Kunststoffschicht und/oder Klebstoffschicht außerdem amphotere Moleküle mit hydrophobem und hydrophilem Molekülteil, wie zuvor definiert, als Inhaltsstoff und/oder integralen Bestandteil aufweist. In diesem Zusammenhang ist es besonders bevorzugt, wenn die amphoteren Moleküle mit hydrophobem und hydrophilem Molekülteil gleichmäßig und/oder homogen in der Kunststoffschicht und/oder Klebstoffschicht verteilt sind.

Eine gleichmäßige bzw. homogene Verteilung der amphoteren Moleküle mit hydrophobem und hydrophilem Molekülteil ist dahingehend zu verstehen, dass in der Klebstoffschicht bzw. Kunststoffschicht Moleküle über die gesamte Fläche der Kunststoffschicht in regelmäßigen Abständen zueinander verteilt sind. Auf diese Weise können im resultierenden Produkt (d. h. mit Kantenband versehenem Werkstoffteil) besonders glatte und besonders dünne Klebstofffugen erzeugt werden, welche mit bloßem Auge nicht sichtbar sind, da eine besonders gleichmäßige Haftung zum Werkstoff erzielt wird. Weiterhin kann mittels der gleichmäßigen bzw. homogenen Verteilung der amphoteren Moleküle mit hydrophobem und hydrophilem Molekülteil die Erwärmung der Klebstoffschicht noch zielgerichteter gesteuert werden, so dass zumindest im Wesentlichen ausschließlich die Klebstoffschicht, nicht jedoch das Kantenband als solches erwärmt wird. Auch kann durch die gleichmäßige und homogene Verteilung der amphoteren Moleküle eine vollständige Verklebung über die gesamte gemeinsame Fläche von beschichtetem Kantenband und Werkstoffteil erzielt werden. Die gleichmäßige Verteilung der amphoteren Moleküle resultiert insbesondere aus dem Dispersions- bzw. Lösungsauftrag und kann insbesondere durch den Einsatz von Filmbildnern noch weiter verstärkt werden.

Was die eingesetzte Menge der amphoteren Moleküle anbelangt, so ist es erfindungsgemäß bevorzugt, wenn die Kunststoffschicht und/oder Klebstoffschicht die amphoteren Moleküle mit hydrophobem und hydrophilem Molekülteil in Mengen im Bereich von 0,005 bis 30 Gew.-%, insbesondere im Bereich von 0,05 bis 25 Gew.-%, vorzugsweise im Bereich von 0,1 bis 20 Gew.-%, bevorzugt im Bereich von 0,5 bis 15 Gew.-%, besonders bevorzugt im Bereich von 1 bis 10 Gew.-%, bezogen auf die Kunststoffschicht und/oder Klebstoffschicht, enthält.

Im Rahmen der vorliegenden Erfindung ist es üblicherweise vorgesehen, dass die Kante, insbesondere das Kantenband, einerseits und die mittels Energieeintrag aktivierbare Klebstoffschicht andererseits vor dem Fügevorgang, insbesondere vor Anbringung der Kante auf den Werkstoff, dauerhaft und/oder untrennbar miteinander verbunden werden. Dies erfolgt derart, wie es für Verfahrensschritt (a) zuvor beschrieben worden ist, d. h. durch Dispersionsauftrag bzw. Lösungsauftrag des Klebstoffpolymers mit anschließender Entfernung von Dispersionsmedium bzw. Lösemittel.

Was die weitere Verfahrensführung anbelangt, so ist es im Rahmen des erfindungsgemäßen Verfahrens bevorzugt, wenn in Verfahrensschritt (b) die aus Verfahrensschritt (a) resultierende, mittels Energieeintrag aktivierbare Klebstoffschicht unter Einwirkung von Energie auf dem Kantenband erwärmt, insbesondere zumindest teilweise geschmolzen und/oder in einen klebefähigen bzw. klebrigen Zustand überführt, wird. Dabei kann es insbesondere vorgesehen sein, dass in Verfahrensschritt (b) die Einwirkung von Energie ein Erwärmen der Klebstoffschicht auf Temperaturen im Bereich von 50 bis 400 °C, insbesondere 70 bis 300 °C, vorzugsweise 100 bis 250 °C, bewirkt.

In Bezug auf den Eintrag von Energie zur Aktivierung der Klebstoff- bzw. Kunststoffschicht ist es im Rahmen der vorliegenden Erfindung bevorzugt, wenn in Verfahrensschritt (b) die Einwirkung von Energie mittels Laserstrahlung, Wärmezufuhr, Plasmastrahlung, Infrarotstrahlung oder Mikrowellenstrahlung, vorzugsweise mittels Laserstrahlung, erfolgt.

Zur (Re-)Aktivierung bzw. zum Aufschmelzen der Klebstoffschicht sind somit die üblichen, dem Fachmann bekannten Formen des Energieeintrags geeignet. Wie die vorstehenden Ausführungen zeigen, ist das erfindungsgemäße Verfahren sozusagen universell einsetzbar, d. h. es muss keine individuelle Anpassung der maschinellen Ausrüstung erfolgen, da die üblichen bekannten Verfahren gleichermaßen eingesetzt werden können.

Im Zusammenhang mit der Aktivierung der Klebstoffschicht bzw. des Klebstoffs ist es erfindungsgemäß bevorzugt, wenn in Verfahrensschritt (b) die Einwirkung von Laserstrahlung mittels einer Laserquelle durchgeführt wird.

Die Begriffe "Laser" bzw. "Laserstrahlung" meinen im Rahmen der vorliegenden Erfindung insbesondere eine Lichtverstärkung durch stimulierte Emission von Strahlung, wobei die Verstärkung durch ein Lasermedium, welches als Festkörper, als Halbleiter, als Gas oder als Flüssigkeit vorliegen kann, erreicht wird. Die Wellenlängen von Laserstrahlung sind äußerst variabel und umfassen ein Spektrum von Mikrowellenstrahlung bis hin zu Röntgenstrahlung. Bei Einsatz von Laserstrahlung im Rahmen von Füge- bzw. Klebeverfahren wird im Allgemeinen die Laserstrahlung mittels eines Lasermediums fokussiert auf die zu fügende bzw. zu verklebende Oberfläche aufgebracht, was zu einer hohen Energiekonzentration in diesem Bereich führt. Durch die Einwirkung des Lasers an der Oberfläche der Klebstoffschicht wird ein schneller Anstieg der Temperatur auch über die Erweichungstemperatur bzw. den Schmelzbereich des Klebstoffs hinaus erzielt, so dass - wie zuvor erwähnt - der Klebstoff in einen klebfähigen bzw. adhäsiven bzw. verklebungsfähigen Zustand übergeht.

Als Laserquelle werden im Rahmen des erfindungsgemäßen Verfahrens insbesondere Halbleiterlaser, Festkörperlaser, Faser-Laser oder CO₂-Laser, vorzugsweise Festkörperlaser oder Halbleiterlaser, bevorzugt Nd:YAG-Laser oder Diodenlaser, eingesetzt.

Gemäß einer bevorzugten Ausführungsform des erfindungsgemäßen Verfahrens ist es zudem üblicherweise vorgesehen, dass in Verfahrensschritt (b) die Einwirkung von Laserstrahlung mittels Laserstrahlung mit einer Wellenlänge im Bereich von 150 nm bis 10,6 µm, insbesondere 250 nm bis 10,6 µm, vorzugsweise 300 nm bis 10,6 µm, bevorzugt 500 nm bis 10,6 µm, erfolgt.

Die durch den Energieeintrag auf die Klebstoff- bzw. Kunststoffschicht erzeugte Energiedichte kann in weiten Bereichen variieren. Besonders bevorzugt wird in Verfahrensschritt (b) durch die Einwirkung von Energie eine Energiedichte im Bereich von 0,001 mJ/cm² bis 1.000 J/cm², insbesondere 0,01 mJ/cm² bis 500 J/cm², vorzugsweise 0,05 mJ/cm² bis 100 J/cm², bevorzugt 0,1 mJ/cm² bis 75 J/cm², besonders bevorzugt 0,2 mJ/cm² bis 50 J/cm², erzeugt.

Schließlich ist es im Rahmen des erfindungsgemäßen Verfahrens üblicherweise vorgesehen, dass das Anbringen der Kante auf den Werkstoff, insbesondere das Anbringen des Kantenbands auf die Schmalfläche des insbesondere plattenförmigen Werkstoffteils, mittels Fügen, vorzugsweise unter Andrücken und/oder Anpressen, insbesondere in einem Durchlaufverfahren, erfolgt.

Dabei handelt es sich um einen dem Fachmann an sich bekannten Prozess, welcher insbesondere unter Einsatz von Andrück- oder Anpressvorrichtungen, wie beispielsweise Rollen, Walzen und dergleichen, erfolgen kann.

Wie zuvor beschrieben, umfasst das erfindungsgemäße Verfahren die zuvor im Detail geschilderten Verfahrensschritte (a) und (b). Dabei ist es erfindungsgemäß bevorzugt, wenn die Verfahrensschritte (a) und (b) separat bzw. (räumlich) getrennt voneinander durchgeführt werden. In diesem Zusammenhang ist es besonders bevorzugt, wenn ein Offline-Prozess eingesetzt wird.

Die zuvor beschriebene Verfahrensführung ist - wie zuvor bereits angeführt -in vielerlei Hinsicht vorteilhaft: Aufgrund der kostengünstigen Produktion sowie des verhältnismäßig geringen apparativen Aufwands erlaubt das erfindungsgemäße Verfahren auch bei Einsatz von üblicherweise nur mittels Koextrusion verarbeitbaren Polyvinylacetaten (d. h. Polyvinylacetaten mit hohen Molekulargewichten und/oder mit geringen Schmelzindizes) eine ökonomische Produktion auch kleiner Chargen bzw. Losgrößen. Darüber hinaus ermöglicht die separate Verfahrensführung (d. h. die nachträgliche Aufbringung der Klebstoff- bzw. Kunststoffschicht auf ein zuvor hergestelltes, d. h. fertig produziertes Kantenband) eine unkomplizierte individuelle Anpassung der eingesetzten Materialien, was insbesondere im Hinblick auf die Optik von Bedeutung ist, um beispielsweise unterschiedliche Farbgebungen der Dekore zu realisieren, aber auch technisch relevant ist im Hinblick auf die Qualität der Verklebung. Darüber hinaus lassen sich die unterschiedlichen Fertigungsstufen durch verschiedene Unternehmen, welche auf den jeweiligen Vorgang spezialisiert sind, ausführen, was insgesamt die Produktionskosten signifikant senkt, da die jeweils spezialisierten Unternehmen ihre bereits vorhandenen Apparaturen weiter einsetzen können.

Alternativ ist es jedoch auch möglich, das Verfahren insgesamt (d. h. die Verfahrensschritte (a) und (b)) als kontinuierliches Verfahren, insbesondere als Durchlaufverfahren, zu betreiben. Dies ist jedoch im Rahmen der vorliegenden Erfindung weniger bevorzugt.

Wie aus den vorstehenden Ausführungen hervorgeht, ist es im Rahmen der vorliegenden Erfindung erstmals gelungen, ein Verfahren zur Anbringung einer Kante, insbesondere Kunststoffkante, auf einen Werkstoff bereitzustellen, welches die Bereitstellung von Klebstoffschichten auf Basis von Polyvinylacetaten auf Kantenbändern im Rahmen von ökonomisch vorteilhaften Offline-Prozessen ermöglicht, wobei sich die Klebstoffschichten trotz der Abwesenheit energieabsorbierender Additive, insbesondere Pigmente, durch ihre hervorragende (Re-)Aktivierbarkeit auszeichnen und darüber hinaus die resultierenden Klebstoffverbindungen zum Werkstoff äußerst stabil sind.

Im Rahmen der vorliegenden Erfindung wird somit eine kostengünstige, individuell anpassbare Verfahrensführung, insbesondere im Offline-Prozess, bei dennoch hervorragenden Klebeverbindungsqualitäten, wie sie bislang im Bereich thermoplastischer Klebstoffe nur durch den Einsatz kostenaufwendiger und wenig individuell anpassbarer Koextrusionsverfahren möglich sind, realisiert.

Weiterer Gegenstand der vorliegenden Erfindung - gemäß einem **zweiten** Aspekt der vorliegenden Erfindung - ist ein Werkstoff, insbesondere ein plattenförmiges Werkstoffteil (Werkstück), wobei mindestens eine Schmalfläche (Schmalseite) des Werkstoffs mit einem Kantenband (Kantenstreifen) versehen ist und wobei der Werkstoff durch ein wie zuvor beschriebenes Verfahren erhältlich ist.

Die erfindungsgemäße Verfahrensführung schlägt sich nämlich unmittelbar auch in den Endprodukten nieder, d. h. in den Werkstoffen, welche an mindestens einer ihrer Schmalflächen mit dem Kantenband versehen sind. Denn einerseits wird auf die erfindungsgemäße Art und Weise eine besonders dünne, mit dem bloßen Auge nicht sichtbare Klebstoffschicht als Fuge - d. h. eine sogenannte "Nullfuge" - zwischen Werkstoffteil und Kantenband realisiert. Andererseits wird mit einem kostengünstigen Nachbeschichtungsprozess eine Verklebungsgüte erzielt, welche sogar die Qualität der Klebeverbindungen von mittels Koextrusion erzeugten beschichteten Kantenbändern übertrifft. Auch die eingesetzten Mengen an Klebstoff sowie die Homogenität von deren Verteilung infolge des Auftrags aus der Dispersion oder Lösung und die Abwesenheit jeglicher energieabsorbierender Additive bzw. Pigmente unterscheiden die erfindungsgemäßen Produkte von Produkten des Standes der Technik.

Insbesondere betrifft die vorliegende Erfindung gemäß diesem Erfindungsaspekt einen Werkstoff, insbesondere ein plattenförmiges Werkstoffteil (Werkstück), wobei mindestens eine Schmalfläche (Schmalseite) des Werkstoffs mit einem Kantenband (Kantenstreifen) versehen ist, wobei das Kantenband mittels Fügen und/oder mittels Verkleben auf die Schmalfäche aufgebracht und dauerhaft hiermit verbunden ist, wobei das Kantenband vor seiner Aufbringung auf den Werkstoff mit seiner mit dem Werkstoff zu verbindenden Seite mit einer mittels Energieeintrag aktivierbaren Klebstoffschicht (Kunststoffschicht) beaufschlagt und/oder versehen worden ist, wobei die mittels Energieeintrag aktivierbare Klebstoffschicht ausgehend von einer Dispersion oder Lösung mindestens eines Klebstoffpolymers in Abwesenheit eines energieabsorbierenden Additivs erhalten ist, wobei das Klebstoffpolymer ausgewählt ist aus Polyvinylacetaten, und wobei das Aufbringen und Verbinden des Kantenbands mit dem Werkstoff unter Einwirkung von Energie und unter Andrücken und/oder Anpressen erfolgt ist.

Für weitergehende Einzelheiten zu den erfindungsgemäßen Werkstoffen kann auf die vorangehenden Ausführungen zu dem erfindungsgemäßen Verfahren verwiesen werden, welche im Hinblick auf die erfindungsgemäßen Werkstoffe entsprechend gelten.

Des Weiteren betrifft die vorliegende Erfindung - gemäß einem **dritten** Erfindungsaspekt - die Verwendung eines Werkstoffs, insbesondere eines plattenförmigen Werkstoffteils (Werkstücks), wie es zuvor beschrieben wurde, zur Herstellung von Möbeln, insbesondere Küchenteilen, und Einrichtungsgegenständen beliebiger Art und/oder in der Holz- und Möbelindustrie.

Für weitergehende Einzelheiten zu der erfindungsgemäßen Verwendung kann auf die vorangehenden Ausführungen zu den obigen Erfindungsaspekten verwiesen werden, welche im Hinblick auf die erfindungsgemäße Verwendung entsprechend gelten.

Ebenfalls Gegenstand der vorliegenden Erfindung - gemäß einem **vierten** Erfindungsaspekt - ist ein Verfahren zur Aufbringung einer mittels Energieeintrag aktivierbaren Klebstoffschicht (Kunststoffschicht) auf mindestens eine Seite eines Kantenbands (Kantenstreifens), insbesondere zu Zwecken der nachfolgenden Anbringung der Kante, insbesondere Kunststoffkante, auf einen Werkstoff mittels Fügen und/oder mittels Verkleben, wobei das Kantenband auf mindestens einer seiner beiden Seiten, insbesondere seiner mit einem Werkstoff zu verbindenden Seite, mit einer mittels Energieeintrag aktivierbaren Klebstoffschicht (Kunststoffschicht) beaufschlagt und/oder versehen wird, wobei die mittels Energieeintrag aktivierbare Klebstoffschicht ausgehend von einer Dispersion oder Lösung mindestens eines Klebstoffpolymers in Abwesenheit eines energieabsorbierenden Additivs erhalten wird, wobei das Klebstoffpolymer aus Polyvinylacetaten ausgewählt wird.

Für weitergehende Einzelheiten zu dem erfindungsgemäßen Verfahren zur Aufbringung einer mittels Energieeintrag aktivierbaren Klebstoffschicht auf mindestens eine Seite eines Kantenbands kann auf die vorangehenden Ausführungen zu den obigen Erfindungsaspekten verwiesen werden, welche im Hinblick auf das zuvor genannte Verfahren entsprechend gelten.

Darüber hinaus ist Gegenstand der vorliegenden Erfindung - gemäß einem **fünften** Aspekt der vorliegenden Erfindung - ein Kantenband (Kantenstreifen), welches auf mindestens einer Seite eine mittels Energieeintrag aktivierbare Klebstoffschicht (Kunststoffschicht) aufweist und durch ein Verfahren, wie es gemäß dem vierten Erfindungsaspekt beschrieben worden ist, erhältlich ist.

Insbesondere ist Gegenstand der vorliegenden Erfindung gemäß diesem Erfindungsaspekt ein Kantenband (Kantenstreifen), welches auf mindestens einer Seite mit einer mittels Energieeintrag aktivierbaren Klebstoffschicht (Kunststoffschicht) beaufschlagt und/oder versehen ist, wobei die mittels Energieeintrag aktivierbare Klebstoffschicht ausgehend von einer Dispersion oder Lösung mindestens eines Klebstoffpolymers in Abwesenheit eines energieabsorbierenden Additivs erhalten ist, wobei das Klebstoffpolymer aus Polyvinylacetaten ausgewählt ist.

Für weitergehende Einzelheiten zu den erfindungsgemäßen Kantenbändern gemäß dem fünften Erfindungsaspekt kann auf die vorangehenden Ausführungen zu den obigen Erfindungsaspekten verwiesen werden, welche im Hinblick auf die erfindungsgemäßen Kantenbänder entsprechend gelten.

Zudem ist Gegenstand der vorliegenden Erfindung - gemäß einem **sechsten** Aspekt der vorliegenden Erfindung - die Verwendung einer Zusammensetzung, insbesondere in Form einer Dispersion oder Lösung mindestens eines Klebstoffpolymers zur Ausrüstung und/oder Beaufschlagung eines Kantenbands (Kantenstreifens) mit einer Klebstoffschicht (Kunststoffschicht), insbesondere zu Zwecken der Anbringung der Kante, insbesondere Kunststoffkante, auf einen Werkstoff mittels Fügen und/oder mittels Verkleben, wobei die Dispersion oder Lösung mindestens ein Klebstoffpolymer, ausgewählt aus Polyvinylacetaten, sowie gegebenenfalls mindestens ein amphoteres Molekül mit hydrophobem und hydrophilem Molekülteil, insbesondere ein Kolloid, vorzugsweise Schutzkolloid, und/oder gegebenenfalls mindestens ein Filmbildungshilfsmittel und/oder einen Filmbildner enthält und frei ist von energieabsorbierenden Additiven, insbesondere frei ist von energieabsorbierenden Pigmenten.

Dies bedeutet, dass die erfindungsgemäß eingesetzte Zusammensetzung, insbesondere Dispersion oder Lösung, keine energieabsorbierenden Additive, insbesondere keine energieabsorbierenden Pigmente, wie sie zuvor beschrieben wurden, enthält bzw. frei ist von energieabsorbierenden Additiven bzw. Pigmenten.

Für weitergehende Einzelheiten zu der erfindungsgemäßen Verwendung kann auf die vorangehenden Ausführungen zu den obigen Erfindungsaspekten verwiesen werden, welche im Hinblick auf die erfindungsgemäße Verwendung entsprechend gelten.

Weitere Ausgestaltungen, Abwandlungen und Variationen sowie Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der folgenden Ausführungsbeispiele veranschaulicht, welche die vorliegende Erfindung jedoch keinesfalls beschränken.

### AUSFÜHRUNGSBEISPIELE:

Nachfolgend werden Ausführungsbeispiele der vorliegenden Erfindung zur Anbringung von beschichteten Kantenbändern an plattenförmigen Werkstoffen beschrieben. Dabei wurden verschiedene erfindungsgemäße Ausführungsformen, insbesondere unter Berücksichtigung der DIN 204 (September 2001), DIN 205 (Juni 2003) und DIN EN 14257 (September 2006), miteinander verglichen.

Als Kantenbänder wurden zur Bereitstellung erfindungsgemäßer und nichterfindungsgemäßer Ausführungsformen jeweils 2,1 cm breite und 3,5 m lange Kantenbänder eingesetzt, welche entsprechend mit einer Klebstoffschicht versehen und nach der Laseraktivierung auf 1,9 cm breite Schmalflächen von Spanplatten bzw. MDF-Platten angebracht wurden. Die Beaufschlagung der Kantenbänder mit der Lösung bzw. Dispersion der Klebstoffpolymere auf Basis von Polyvinylacetaten (Lösungen bzw. Dispersionen von Polyvinylacetaten bzw. jeweils ca. 55 Gew.-% Festkörperanteil) erfolgte durch einen dem Fachmann wohlbekannten Auftrag mittels Schlitzdüsen. Die Aktivierung der Klebstoffschicht wurde unter Einwirkung verschiedener Energieformen durchgeführt. Der Aktivierungsprozess als solcher - unabhängig von der eingesetzten Energieform - ist dem Fachmann bekannt und bedarf keinen weiteren Ausführungen. Der Fügevorgang erfolgte ebenfalls mit Hilfe dem Fachmann wohlbekannter Andrück- bzw. Anpressverfahren.

Insgesamt wurden vier verschiedene Versuchsreihen durchgeführt, wobei erfindungsgemäße Ausführungsformen mit (i) unterschiedlichen Mengen an amphoteren Moleküle, (ii) unterschiedlichen Mengen eines Filmbildners, (iii) unterschiedlich vorbereiteten Oberflächen des Kantenbandes sowie (iv) unter Eintrag unterschiedlicher Energieformen miteinander verglichen wurden.

Zur Beurteilung der Qualität der Klebeverbindungen zwischen Werkstück und Kantenband wurde die Adhäsion von Kantenband und Werkstück einerseits bei Raumtemperatur (25 °C) und andererseits zur Analyse der Kältebeständigkeit bei +5 °C untersucht. Darüber hinaus wurde im Rahmen eines aufsteigenden Wärmetests bis zu Temperaturen von 120 °C die Wärmebeständigkeit untersucht. Weiterhin wurde im Rahmen eines Wärmelangzeittests über 4 Wochen bei 50 °C untersucht, inwieweit sich die Klebeverbindungen unter lang anhaltendem Einfluss hoher Temperaturen in ihren Eigenschaften verändern. Schließlich wurde die Adhäsion der Klebeverbindungen bei Raumtemperatur nach dem Langzeittest untersucht.

Die Untersuchungen der Adhäsion (bei Raumtemperatur, bei +5 °C sowie nach Abschluss des Wärmelangzeittests) erfolgten derart, dass die Versagensart der Klebeverbindung unter Belastung analysiert wurde. Üblicherweise wird bei Versagensarten von Klebstoffverbindungen zwischen Adhäsionsbruch, Kohäsionsbruch im Klebstoff, Kohäsionsbruch im Fügeteilwerkstoff sowie Grenzschichtbrüchen unterschieden.

Ein Adhäsionsbruch ist auf eine zu geringe Haftung zwischen Klebstoffschicht und Werkstoff zurückzuführen, so dass sich der Klebstoff vollständig vom Werkstoff trennt; Adhäsionsbrüche konnten bei keiner Versuchsreihe beobachtet werden. Bei Grenzschichtbrüchen tritt der Bruch direkt an der Phasengrenze zwischen Fügeteiloberfläche und Klebstoffschicht auf; derartige Brüche konnten ebenfalls bei keiner Versuchsreihe beobachtet werden. Kohäsionsbrüche im Klebstoff erfolgen im Allgemeinen bei einer geringen inneren Festigkeit des Klebstoffs, so dass nach dem Bruch die Fügeteiloberflächen (Kantenband und Werkstoff) mit Klebstoff bedeckt sind. Kohäsionsbrüche im Werkstoff hingegen resultieren, wenn die innere Festigkeit des Klebstoffs höher ist als die des eingesetzten Werkstoffs. Die Klebeverbindung bleibt von der mechanischen Belastung zumindest im Wesentlichen unbeeinträchtigt. Derartige Brüche sind somit als Indikator für besonders stabile Klebeverbindungen zu werten. Bei allen Versuchsreihen traten Kohäsionsbrüche im Klebstoff bzw. Werkstoff sowie deren Mischformen auf. Je höher der Anteil der Brüche im Werkstoff ist, desto stabiler ist folglich auch die Klebeverbindung.

Die Bewertung erfolgte dabei nach dem folgenden Notensystem:

| | | |
|---|---|---|
| **1 - 2,9:** | "(sehr) gut" | ≤ 100 - 75 % Werkstoffbruch |
| **3 - 3,9:** | "befriedigend " | ≤ 75 - 50 % Werkstoffbruch |
| **4:** | "ausreichend" | ≤ 50 - 25 % Werkstoffbruch |
| **5:** | "mangelhaft" | ≤ 25 % Werkstoffbruch |

Die Analyse der Wärmebeständigkeiten erfolgte derart, dass die Klebeverbindungen hinsichtlich des Auftretens sichtbarer Veränderungen in Folge der starken bzw. anhaltenden Wärmeeinwirkung untersucht wurden ("k.s.V." = keine sichtbaren Veränderungen).

### (i) Einfluss der Menge an Schutzkolloid

In der ersten Versuchsreihe wurde der Einfluss der eingesetzten gewichtsbezogenen Menge an Schutzkolloiden, bezogen auf die Dispersion bzw. Lösung, auf die Stabilität der Klebeverbindung untersucht. Als Schutzkolloid wurden Ethylen-Vinylalkohol-Copolymere eingesetzt. Die (Re-)Aktivierung der Klebstoffschicht wurde unter Einsatz eines Dioden-Lasers durchgeführt. Die diesbezüglichen Ergebnisse sind der nachfolgenden Tabelle 1 zu entnehmen:

**Tabelle 1: Einfluss der eingesetzten Menge Schutzkolloid auf die Klebeverbindungen**

| | Beispiel 1 | | Beispiel 2 | | Beispiel 3 | |
|---|---|---|---|---|---|---|
| Anteile Schutzkolloid [Gew.-%] | 1 | 1 | 3 | 3 | 6 | 6 |
| Werkstoff | MDF | Span | MDF | Span | MDF | Span |
| Adhäsion bei RT | 2,2 | 2,1 | 1,6 | 1,8 | 2,7 | 2,5 |
| Adhäsion bei +5 °C | 2,2 | 2,3 | 1,6 | 1,8 | 2,8 | 2,5 |
| aufsteigender Wärmetest bis 120 °C | k.s.V. | k.s.V. | k.s.V. | k.s.V. | k.s.V. | k.s.V. |
| Wärmelangzeittest | k.s.V. | k.s.V. | k.s.V. | k.s.V. | k.s.V. | k.s.V. |
| Adhäsion bei RT nach Wärmelangzeittest | 2,4 | 2,3 | 1,7 | 1,8 | 2,8 | 2,6 |

Die vorstehenden Ausführungen zeigen, dass sich mit allen getesteten Konzentrationen des Schutzkolloids im Bereich von 1 Gew.-% bis 6 Gew.-%, jeweils bezogen auf die Dispersion bzw. Lösung, stabile Klebeverbindungen erzeugen lassen. Die besten Ergebnisse wurden jeweils unter Einsatz der Schutzkolloide in gewichtsbezogenen Mengen von 3 Gew.-% erzielt. Bei Einsatz von nur 1 Gew.-% bzw. 6 Gew.-% des Schutzkolloids ließ die Stabilität der Klebeverbindung leicht nach, war aber insgesamt immer noch als "gut" zu bezeichnen.

### (ii) Einfluss des Einsatzes von Filmbildern

In einer zweiten Versuchsreihe wurde darüber hinaus der Einfluss des zusätzlichen Einsatzes von Filmbildnern auf die Klebeverbindung untersucht. Die in diesem Zusammenhang eingesetzten Dispersionen bzw. Lösungen des Klebstoffpolymers enthielten 3 Gew.-% des Schutzkolloids auf Basis von Ethylen-Vinylalkohol-Copolymeren, bezogen auf die Dispersion bzw. Lösung. Als Filmbildner wurde Propylencarbonat eingesetzt. Die (Re-)Aktivierung der Klebstoffschicht wurde unter Einsatz eines Dioden-Lasers durchgeführt.

Die diesbezüglich erhaltenen Ergebnisse sind in der nachfolgenden Tabelle 2 aufgeführt:

**Tabelle 2: Einfluss des Filmbildners auf die Qualität der Klebeverbindungen**

| | Beispiel 4 | | Beispiel 5 | |
|---|---|---|---|---|
| Anteile Filmbildner [Gew.-%] | 0,05 | 0,05 | 2 | 2 |
| Werkstoff | MDF | Span | MDF | Span |
| Adhäsion bei RT | 1,4 | 1,5 | 1,2 | 1,3 |
| Adhäsion bei +5 °C | 1,5 | 1,5 | 1,3 | 1,3 |
| Aufsteigender Wärmetest bis 120 °C | k.s.V. | k.s.V. | k.s.V. | k.s.V. |
| Wärmelangzeittest | k.s.V. | k.s.V. | k.s.V. | k.s.V. |
| Adhäsion bei RT nach Wärmelangzeittest | 1,5 | 1,5 | 1,3 | 1,3 |

Wie den in Tabelle 2 aufgeführten Ergebnissen zu entnehmen ist, kann durch den zusätzlichen Einsatz eines Filmbildners die Qualität der Klebeverbindungen noch weitergehend verbessert werden. Ohne sich hierbei auf diese Theorie beschränken zu wollen, bewirkt der Filmbildner eine noch gleichmäßigere Verteilung der Lösung bzw. Dispersion auf dem Kantenband. Insbesondere ist es auch denkbar - ohne sich hierbei auf diese Theorie beschränken zu wollen - dass der Einsatz eines Filmbildners zu einer noch gleichmäßigeren Verteilung der eingesetzten Schutzkolloide führt. Auf diese Weise kann eine noch gleichmäßigere Erwärmung bzw. Aufschmelzung der Klebstoffpolymere erzielt werden. Sowohl bei Einsatz von 0,05 Gew.-% als auch 2,0 Gew.-% des Filmbildners, bezogen auf die Lösung bzw. Dispersion, wurden hervorragende Qualitäten der Klebeverbindungen erzielt.

### (iii) Einfluss der Oberflächenvorbehandlung

Weiterhin wurde in einer dritten Versuchsreihe der Einfluss der Vorbereitung der Oberfläche auf die Klebstoffschicht in Bezug auf die Erzeugung stabiler Klebeverbindungen untersucht. Im Rahmen dieses Vergleichstests wurden unbehandelte Kantenbänder, mittels Coronabehandlung behandelte Kantenbänder sowie mit einem Haftvermittler (Primer) beschichtete Kantenbänder eingesetzt. Die in diesem Zusammenhang eingesetzten Dispersionen bzw. Lösungen des Klebstoffpolymers enthielten 3 Gew.-% des Schutzkolloids auf Basis von Ethylen-Vinylalkohol-Copolymeren, bezogen auf die Dispersion bzw. Lösung. Die (Re-)Aktivierung der Klebstoffschicht wurde unter Einsatz eines Dioden-Lasers durchgeführt.

Die diesbezüglich erhaltenen Ergebnisse sind der nachfolgenden Tabelle 3 zu entnehmen:

**Tabelle 3: Einfluss der Oberflächenvorbehandlung auf die Klebeverbindung**

| | Beispiel 6 | | Beispiel 7 | | Beispiel 8 | |
|---|---|---|---|---|---|---|
| Vorbereitung der Oberfläche | Keine Vorbehandlung | | Coronabehandlung | | Haftvermittler (Primer) | |
| Werkstoff | MDF | Span | MDF | Span | MDF | Span |
| Adhäsion bei RT | 1,8 | 1,9 | 1,4 | 1,5 | 1,3 | 1,5 |
| Adhäsion bei +5 °C | 1,9 | 1,9 | 1,5 | 1,5 | 1,3 | 1,5 |
| aufsteigender Wärmetest bis 120 °C | k.s.V. | k.s.V. | k.s.V. | k.s.V. | k.s.V. | k.s.V. |
| Wärmelangzeittest | k.s.V. | k.s.V. | k.s.V. | k.s.V. | k.s.V. | k.s.V. |
| Adhäsion bei RT nach Wärmelangzeittest | 1,8 | 2,0 | 1,4 | 1,5 | 1,4 | 1,5 |

Zwar lassen sich auch ohne Oberflächenvorbereitung hervorragende Klebeverbindungen erzeugen, allerdings kann die Qualität bzw. Adhäsion von Kantenband und Klebstoffschicht und in der Folge auch die Qualität der Klebstoffverbindung durch eine Vorbehandlung weiter gesteigert werden. Dabei werden sowohl bei Einsatz von Coronabehandlung als auch bei der Beschichtung mit einem Haftvermittler hervorragende Werte in Bezug auf die Stabilität der Klebeverbindungen erzielt werden.

### (iv) Einfluss der Energieform auf die Klebeverbindung

In einer letzten Versuchsreihe wurden die Klebstoffschichten durch unterschiedliche übliche und dem Fachmann als solche geläufige Energieformen zum Aufschmelzen (re-)aktiviert. Die in diesem Zusammenhang eingesetzten Dispersionen bzw. Lösungen des Klebstoffpolymers enthielten 3 Gew.-% des Schutzkolloids auf Basis von Ethylen-Vinylalkohol-Copolymeren, bezogen auf die Dispersion bzw. Lösung. Die in diesem Zusammenhang erhaltenen Ergebnisse sind der nachfolgenden Tabelle 4 zu entnehmen.

**Tabelle 4: Einfluss der Energieform auf die Klebeverbindung**

| | Beispiel 9 | | Beispiel 10 | | Beispiel 11 | |
|---|---|---|---|---|---|---|
| Energieform | Laserstrahlung | | Plasmastrahlung | | Infrarotstrahlung | |
| Werkstoff | MDF | Span | MDF | Span | MDF | Span |
| Adhäsion bei RT | 1,4 | 1,5 | 1,7 | 1,7 | 1,8 | 1,7 |
| Adhäsion bei +5°C | 1,4 | 1,6 | 1,9 | 1,8 | 2,0 | 1,8 |
| aufsteigender Wärmetest bis 120 °C | k.s.V. | k.s.V. | k.s.V. | k.s.V. | k.s.V. | k.s.V. |
| Wärmelangzeittest | k.s.V. | k.s.V. | k.s.V. | k.s.V. | k.s.V. | k.s.V. |
| Adhäsion bei RT nach Wärmelangzeittest | 1,5 | 1,5 | 2,0 | 1,8 | 2,0 | 1,8 |

Mit allen drei getesteten Energieformen lassen sich stabile Klebeverbindungen herstellen. Die besten Ergebnisse werden jedoch unter Einsatz von Laserstrahlung zum Energieeintrag erzielt.

Die obigen Ausführungen zeigen, dass es im Rahmen der vorliegenden Erfindung erstmals gelungen ist, ein Nachbeschichtungsverfahren für Kantenbänder bereitzustellen, welches die Erzeugung nachträglich (re-)aktivierbarer Klebstoffschichten, insbesondere mittels Laserstrahlung (re-)aktivierbarer Klebstoffschichten, ermöglicht, auch ohne dass die Anwesenheit eines reversibel Energie absorbierenden Additivs, insbesondere Pigments, erforderlich ist, wobei sich die resultierenden Klebstoffverbindungen darüber hinaus auch durch ihre hervorragende Stabilität auszeichnen

## Patentansprüche

1. Verfahren zur Anbringung einer Kante, insbesondere Kunststoffkante, auf einen Werkstoff, insbesondere Verfahren zur Anbringung eines Kantenbands (Kantenstreifens) auf mindestens eine Schmalfläche (Schmalseite) eines insbesondere plattenförmigen Werkstoffteils (Werkstücks), mittels Fügen und/oder mittels Verkleben, wobei
(a) zunächst das Kantenband auf seiner mit dem Werkstoff, insbesondere Werkstoffteil, zu verbindenden Seite mit einer mittels Energieeintrag aktivierbaren Klebstoffschicht (Kunststoffschicht) beaufschlagt und/oder versehen wird, wobei die mittels Energieeintrag aktivierbare Klebstoffschicht ausgehend von einer Dispersion oder Lösung mindestens eines Klebstoffpolymers in Abwesenheit eines energieabsorbierenden Additivs erhalten wird, wobei das Klebstoffpolymer ausgewählt ist aus Polyvinylacetaten, und
(b) nachfolgend das auf diese Weise mit der mittels Energieeintrag aktivierbaren Klebstoffschicht beaufschlagte und/oder versehene Kantenband unter Einwirkung von Energie auf mindestens eine Schmalfläche des Werkstoffteils angebracht wird, insbesondere dauerhaft mit mindestens einer Schmalfläche des Werkstoffteils verbunden und/oder verklebt wird.

2. Verfahren nach Anspruch 1,
wobei als Kante, insbesondere Kantenband, ein Kantenband aus einem thermoplastischen oder duroplastischen Kunststoff oder aus Holz oder aus Papier oder Pappe oder aus Metallen, insbesondere ein Kantenband aus einem thermoplastischen oder duroplastischen Kunststoff, vorzugsweise ein Kantenband aus einem thermoplastischen Kunststoff, eingesetzt wird; und/oder
wobei als Kunststoffkante, insbesondere Kantenband, ein Kantenband auf Basis von (i) Polyolefinen, bevorzugt Polyethylen (PE) oder Polypropylen (PP); (ii) Polymethacrylaten (PMA); (iii) Polymethylmethacrylaten (PMMA); (iv) Polyvinylchlorid (PVC); (v) Polyvinylidenhalogenid, insbesondere Polyvinylidenfluorid (PVDF) oder Polyvinylidenchlorid (PVDC); (vi) Acrylnitril/Butadien/Styrol-Copolymer (ABS); (vii) Polyamiden (PA), Polycarbonaten (PC); (viii) Melamin-Formaldehydharzen; (ix) Epoxidharzen; (x) Phenolharzen oder (xi) Harnstoffharzen, eingesetzt wird; und/oder
wobei als Werkstoff, insbesondere plattenförmiges Werkstoffteil, Holz, Holzersatzstoffe, Kunststoffe, Metalle oder Glas, vorzugsweise Holz oder Holzersatzstoffe, eingesetzt wird.

3. Verfahren nach Anspruch 1 oder 2, wobei die Kante, insbesondere das Kantenband, vor Beaufschlagung mit der Dispersion oder Lösung des Klebstoffpolymers mit einem Haftvermittler (Primer) versehen und/oder beschichtet wird und/oder einer Oberflächenbehandlung und/oder Oberflächenaktivierung, vorzugsweise mittels Coronabehandlung oder Plasmabehandlung, unterzogen wird, insbesondere wobei der Haftvermittler ausgewählt wird aus der Gruppe von Polymerlösungen oder Polymerdispersionen, insbesondere lösemittelhaltigen oder vorzugsweise wässrigen Polymerdispersionen, vorzugsweise Polyurethan(PU)-Dispersionsklebstoffen, und/oder wobei als Haftvermittler vorzugsweise wässrige Polymerdispersionen eingesetzt werden, insbesondere ausgewählt aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie Mischungen aus zwei oder mehreren der vorgenannten Dispersionen und/oder wobei als Haftvermittler eine wässrige Polymerdispersion auf Basis einer insbesondere wässrig basierten Polyurethandispersion eingesetzt wird.

4. Verfahren nach einem der vorangehenden Ansprüche,
wobei die in Verfahrensschritt (a) eingesetzte Dispersion oder Lösung des Klebstoffpolymers zur Beaufschlagung der Kante, insbesondere des Kantenbands, mit einer mittels Energieeintrag aktivierbaren Klebstoffschicht wässrig-basiert oder organisch-basiert, vorzugsweise wässrig-basiert, ausgebildet ist; und/oder
wobei das Klebstoffpolymer ein mittleres Molekulargewicht, insbesondere gewichtsmittleres Molekulargewicht (Mw), von mindestens 75.000 g/mol, insbesondere mindestens 85.000 g/mol, vorzugsweise mindestens 100.000 g/mol, aufweist und/oder wobei das Klebstoffpolymer ein mittleres Molekulargewicht, insbesondere gewichtsmittleres Molekulargewicht (Mw), im Bereich von 75.000 g/mol bis 10.000.000 g/mol, insbesondere im Bereich von 85.000 g/mol bis 5.000.000 g/mol, vorzugsweise im Bereich von 100.000 g/mol bis 3.000.000 g/mol, bevorzugt im Bereich von 150.000 g/mol bis 2.000.000 g/mol, besonders bevorzugt im Bereich von 175.000 g/mol bis 1.500.000 g/mol, ganz besonders bevorzugt im Bereich von 200.000 g/mol bis 1.000.000 g/mol, aufweist; und/oder
wobei das Klebstoffpolymer bei einer Temperatur von 190 °C und einer Last von 2,16 kg einen Schmelzindex, insbesondere bestimmt nach ISO 1133, von höchstens 50 g/10 min, insbesondere höchstens 35 g/10 min, vorzugsweise höchstens 25 g/10 min, aufweist und/oder wobei das Klebstoffpolymer bei einer Temperatur von 190 °C und einer Last von 2,16 kg einen Schmelzindex, insbesondere bestimmt nach ISO 1133, im Bereich von 0,01 g/10 min bis 50 g/10 min, insbesondere im Bereich von 0,1 g/10 min bis 35 g/10 min, vorzugsweise im Bereich von 0,2 g/10 min bis 25 g/10 min, bevorzugt im Bereich von 0,3 g/10 min bis 20 g/10 min, aufweist; und/oder
wobei die in Verfahrensschritt (a) eingesetzte Dispersion oder Lösung das Klebstoffpolymer in einer Menge im Bereich von 5 bis 90 Gew.-%, insbesondere 10 bis 80 Gew.-%, vorzugsweise 15 bis 70 Gew.-%, bevorzugt 17,5 bis 65 Gew.-%, besonders bevorzugt 20 bis 60 Gew.-%, ganz besonders bevorzugt 25 bis 55 Gew.-%, bezogen auf die Dispersion oder Lösung, aufweist.

5. Verfahren nach einem der vorangehenden Ansprüche, wobei die in Verfahrensschritt (a) eingesetzte Dispersion oder Lösung amphotere Moleküle mit hydrophobem und hydrophilem Molekülteil, insbesondere Kolloide, vorzugsweise Schutzkolloide, aufweist, insbesondere wobei die Moleküle ausgewählt sind aus (i) vinylgruppenhaltigen Polymeren, insbesondere Ethylen-Vinylalkohol-Copolymeren, Polyvinylacetaten, Polyvinylalkoholen, Polyvinylpyrrolidonen sowie deren Mischungen; (ii) Celluloseethern, insbesondere Methylcellulose, Hydroxyethylcellulose, Hydroxypropylmethylcellulose sowie deren Mischungen; (iii) Polyacrylaten; (iv) Polysacchariden, insbesondere Stärke, Alginaten sowie deren Mischungen; (v) Proteinen, insbesondere Gelatine, sowie Mischungen der vorgenannten Polymere und/oder insbesondere wobei Ethylen-Vinylalkohol-Copolymere bevorzugt sind, insbesondere wobei die in Verfahrensschritt (a) eingesetzte Dispersion oder Lösung die amphoteren Moleküle mit hydrophobem und hydrophilem Molekülteil in einer Menge im Bereich von 0,001 bis 20 Gew.-%, insbesondere im Bereich von 0,01 bis 15 Gew.-%, vorzugsweise im Bereich von 0,1 bis 10 Gew.-%, bevorzugt im Bereich von 0,5 bis 9 Gew.-%, besonders bevorzugt im Bereich von 1 bis 7 Gew.-%, ganz besonders bevorzugt im Bereich von 1,5 bis 5 Gew.-%, bezogen auf die Dispersion oder Lösung, aufweist.

6. Verfahren nach einem der vorangehenden Ansprüche,
wobei die in Verfahrensschritt (a) eingesetzte Dispersion oder Lösung kein Laserstrahlung absorbierendes Additiv, insbesondere kein Laserstrahlung absorbierendes Pigment, aufweist; und/oder
wobei die in Verfahrensschritt (a) eingesetzte Dispersion oder Lösung kein Plasmastrahlung absorbierendes Additiv, insbesondere kein plasmaabsorbierendes Pigment, aufweist; und/oder
wobei die in Verfahrensschritt (a) eingesetzte Dispersion oder Lösung kein Wärmestrahlung absorbierendes Additiv, insbesondere kein Wärmestrahlung absorbierendes Pigment, aufweist; und/oder
wobei die in Verfahrensschritt (a) eingesetzte Dispersion oder Lösung kein Mikrowellenstrahlung absorbierendes Additiv, insbesondere kein Mikrowellenstrahlung absorbierendes Pigment, aufweist; und/oder wobei die in Verfahrensschritt (a) eingesetzte Dispersion oder Lösung kein IR-Strahlung absorbierendes Additiv, insbesondere kein IR-Strahlung absorbierendes Pigment, aufweist; und/oder
wobei die in Verfahrensschritt (a) eingesetzte Dispersion oder Lösung wässrig basiert ausgebildet ist; und/oder
wobei die in Verfahrensschritt (a) eingesetzte Dispersion oder Lösung auf einen zumindest im Wesentlichen neutralen pH-Wert, insbesondere einen pH-Wert im Bereich von 6,0 bis 8,0, vorzugsweise im Bereich von 6,5 bis 7,5, eingesetzt wird; und/oder
wobei die in Verfahrensschritt (a) eingesetzte Dispersion oder Lösung mindestens ein pH-Stellmittel enthält; und/oder
wobei die in Verfahrensschritt (a) eingesetzte Dispersion oder Lösung außerdem mindestens ein Filmbildungshilfsmittel und/oder mindestens einen Filmbildner enthält, insbesondere in Mengen im Bereich von 0,001 bis 6 Gew.-%, insbesondere im Bereich von 0,01 bis 5 Gew.-%, vorzugsweise im Bereich von 0,01 bis 4 Gew.-%, bevorzugt im Bereich von 0,05 bis 3,5 Gew.-%, besonders bevorzugt im Bereich von 0,1 bis 3 Gew.-%, bezogen auf die Dispersion oder Lösung; und/oder
wobei die in Verfahrensschritt (a) eingesetzte Dispersion oder Lösung außerdem mindestens ein weiteres Additiv und/oder mindestens einen weiteren Hilfsstoff enthält, insbesondere ausgewählt aus Dispergierhilfsmitteln, Emulgatoren, Füllstoffen, Entschäumern, Farbstoffen, Färbemitteln, Vergilbungsinhibitoren, Antioxidationsmitteln, Stabilisatoren, Konservierungsmitteln, UV-Stabilisatoren, Verlaufsmitteln, Rheologiemodifikatoren, Viskositätsregulatoren, Verdickungsmitteln sowie deren Mischungen und Kombinationen.

7. Verfahren nach einem der vorangehenden Ansprüche,
wobei in Verfahrensschritt (a) zum Erhalt einer mittels Energieeintrag aktivierbaren Kunststoffschicht das Kantenband mit der Dispersion oder Lösung des Klebstoffpolymers durch Beschichtungsverfahren, insbesondere durch thermisches, chemisches, mechanisches oder thermomechanisches Beschichten, vorzugsweise durch Rakeln, Walzen, Sprühauftrag, Düsen, Spritzen oder Plastifizieren, beaufschlagt und/oder versehen wird; und/oder wobei in Verfahrensschritt (a) die Dispersion oder Lösung des Klebstoffpolymers in einer Auftragsmenge von höchstens 300 g/m², insbesondere höchstens 200 g/m², vorzugsweise höchstens 150 g/m², aufgetragen wird und/oder in Verfahrensschritt (a) die Dispersion oder Lösung des Klebstoffpolymers in einer Auftragsmenge im Bereich von 1 bis 300 g/m², insbesondere im Bereich von 5 bis 200 g/m², bevorzugt im Bereich von 10 bis 150 g/m², aufgetragen wird; und/oder
wobei Verfahrensschritt (a) kontinuierlich, insbesondere als Durchlaufverfahren, oder aber stationär, vorzugsweise als Durchlaufverfahren, betrieben wird; und/oder
wobei Verfahrensschritt (a) als Durchlaufverfahren mit einem Vorschub von mindestens 1 m/min, insbesondere mindestens 5 m/min, vorzugsweise mindestens 10 m/min, bevorzugt mindestens 15 m/min, besonders bevorzugt mindestens 20 m/min, durchgeführt wird und/oder Verfahrensschritt (a) als Durchlaufverfahren mit einem Vorschub im Bereich von 1 bis 100 m/min, insbesondere im Bereich von 5 bis 75 m/min, vorzugsweise im Bereich von 10 bis 60 m/min, bevorzugt im Bereich von 15 bis 50 m/min, besonders bevorzugt im Bereich von 20 bis 40 m/min, durchgeführt wird.

8. Verfahren nach einem der vorangehenden Ansprüche,
wobei in Verfahrensschritt (a) nach der Beaufschlagung des Kantenbands mit der Dispersion oder Lösung des Klebstoffpolymers das Dispersionsmedium oder Lösemittel entfernt wird, insbesondere mittels Trocknung und/oder Verdampfen des Dispersionsmediums oder Lösemittels bei Raumtemperatur, insbesondere 25 °C, oder bei erhöhten Temperaturen und/oder bei Atmosphärendruck oder reduziertem Druck, insbesondere zum Erhalt einer nichtklebrigen und/oder klebefreien, aber mittels Energieeintrag aktivierbaren und/oder verklebbaren Kunststoffschicht und/oder Klebstoffschicht; und/oder wobei die aus Verfahrensschritt (a) resultierende, mittels Energieeintrag aktivierbare Kunststoffschicht und/oder Klebstoffschicht eine Dicke von höchstens 200 µm, insbesondere höchstens 150 µm, vorzugsweise höchstens 100 µm, aufweist und/oder wobei die aus Verfahrensschritt (a) resultierende, mittels Energieeintrag aktivierbare Kunststoffschicht und/oder Klebstoffschicht eine Dicke im Bereich von 0,1 bis 200 µm, insbesondere im Bereich von 0,5 bis 150 µm, vorzugsweise im Bereich von 1 bis 100 µm, aufweist; und/oder wobei die aus Verfahrensschritt (a) resultierende, mittels Energieeintrag aktivierbare Kunststoffschicht und/oder Klebstoffschicht amphotere Moleküle mit hydrophobem und hydrophilem Molekülteil als weiteren Inhaltsstoff und/oder integralen Bestandteil aufweist, insbesondere wobei die amphoteren Moleküle mit hydrophobem und hydrophilem Molekülteil gleichmäßig und/oder homogen in der Kunststoffschicht und/oder Klebstoffschicht verteilt sind und/oder insbesondere wobei die Kunststoffschicht und/oder Klebstoffschicht die amphoteren Moleküle mit hydrophobem und hydrophilem Molekülteil in Mengen im Bereich von 0,005 bis 30 Gew.-%, insbesondere im Bereich von 0,05 bis 25 Gew.-%, vorzugsweise im Bereich von 0,1 bis 20 Gew.-%, bevorzugt im Bereich von 0,5 bis 15 Gew.-%, besonders bevorzugt im Bereich von 1 bis 10 Gew.-%, bezogen auf die Kunststoffschicht und/oder Klebstoffschicht, enthält.

9. Verfahren nach einem der vorangehenden Ansprüche,
wobei die Kante, insbesondere das Kantenband, und die mittels Energieeintrag aktivierbare Klebstoffschicht vor dem Fügevorgang, insbesondere vor Anbringung der Kante, insbesondere Kunststoffkante, auf den Werkstoff, dauerhaft und/oder untrennbar miteinander verbunden werden; und/oder wobei in Verfahrensschritt (b) die aus Verfahrensschritt (a) resultierende, mittels Energieeintrag aktivierbare Klebstoffschicht unter Einwirkung von Energie auf dem Kantenband erwärmt, insbesondere zumindest teilweise geschmolzen und/oder in einen klebefähigen und/oder klebrigen Zustand überführt, wird; und/oder
wobei in Verfahrensschritt (b) die Einwirkung von Energie ein Erwärmen der Klebstoffschicht auf Temperaturen im Bereich von 50 bis 400 °C, insbesondere 70 bis 300 °C, vorzugsweise 100 bis 250 °C, bewirkt; und/oder wobei in Verfahrensschritt (b) die Einwirkung von Energie mittels Laserstrahlung, Wärmezufuhr, Plasmastrahlung, Infrarotstrahlung oder Mikrowellenstrahlung, vorzugsweise mittels Laserstrahlung, erfolgt, insbesondere wobei in Verfahrensschritt (b) die Einwirkung von Laserstrahlung mittels einer Laserquelle, insbesondere eines Halbleiterlasers, Festkörperlasers, Faser-Lasers oder CO₂-Lasers, vorzugsweise Festkörperlasers oder Halbleiterlasers, bevorzugt Nd:YAG-Lasers oder Diodenlasers, durchgeführt wird und/oder insbesondere wobei in Verfahrensschritt (b) die Einwirkung von Laserstrahlung mittels Laserstrahlung mit einer Wellenlänge im Bereich von 150 nm bis 10,6 µm, insbesondere 250 nm bis 10,6 µm, vorzugsweise 300 nm bis 10,6 µm, bevorzugt 500 nm bis 10,6 µm, erfolgt; und/oder wobei in Verfahrensschritt (b) durch die Einwirkung von Energie eine Energiedichte im Bereich von 0,001 mJ/cm² bis 1.000 J/cm², insbesondere 0,01 mJ/cm² bis 500 J/cm²,vorzugsweise 0,05 mJ/cm² bis 100 J/cm², bevorzugt 0,1 mJ/cm² bis 75 J/cm², besonders bevorzugt 0,2 mJ/cm² bis 50 J/cm², erzeugt wird.

10. Verfahren nach einem der vorangehenden Ansprüche,
wobei das Anbringen der Kante, insbesondere Kunststoffkante, auf den Werkstoff, insbesondere das Anbringen des Kantenbands auf die Schmalfläche des insbesondere plattenförmigen Werkstoffteils, mittels Fügen, vorzugsweise unter Andrücken und/oder Anpressen, insbesondere in einem Durchlaufverfahren, erfolgt; und/oder
wobei die Verfahrensschritte (a) und (b) separat und/oder (räumlich) getrennt voneinander durchgeführt werden, vorzugsweise im Rahmen eines Offline-Prozesses.

11. Werkstoff, insbesondere plattenförmiges Werkstoffteil (Werkstück), wobei mindestens eine Schmalfläche (Schmalseite) des Werkstoffs mit einem Kantenband (Kantenstreifen) versehen ist und wobei der Werkstoff erhältlich ist durch ein Verfahren nach einem der vorangehenden Ansprüche.

12. Werkstoff, insbesondere plattenförmiges Werkstoffteil (Werkstück), wobei mindestens eine Schmalfläche (Schmalseite) des Werkstoffs mit einem Kantenband (Kantenstreifen) versehen ist, wobei das Kantenband mittels Fügen und/oder mittels Verkleben auf die Schmalfäche aufgebracht und dauerhaft hiermit verbunden ist, wobei das Kantenband vor seiner Aufbringung auf den Werkstoff mit seiner mit dem Werkstoff zu verbindenden Seite mit einer mittels Energieeintrag aktivierbaren Klebstoffschicht (Kunststoffschicht) beaufschlagt und/oder versehen worden ist, wobei die mittels Energieeintrag aktivierbare Klebstoffschicht ausgehend von einer Dispersion oder Lösung mindestens eines Klebstoffpolymers in Abwesenheit eines energieabsorbierenden Additivs erhalten ist, wobei das Klebstoffpolymer ausgewählt ist aus Polyvinylacetaten, und wobei das Aufbringen und Verbinden des Kantenbands mit dem Werkstoff unter Einwirkung von Energie und unter Andrücken und/oder Anpressen erfolgt ist.

13. Verwendung eines Werkstoffs, insbesondere plattenförmigen Werkstoffteils (Werkstücks), nach Anspruch 11 oder 12 zur Herstellung von Möbeln, insbesondere Küchenteilen, und Einrichtungsgegenständen beliebiger Art und/oder in der Holz- und Möbelindustrie.

14. Verfahren zur Aufbringung einer mittels Energieeintrag aktivierbaren Klebstoffschicht (Kunststoffschicht) auf mindestens eine Seite eines Kantenbands (Kantenstreifens), insbesondere zu Zwecken der nachfolgenden Anbringung der Kante, insbesondere Kunststoffkante, auf einen Werkstoff mittels Fügen und/oder mittels Verkleben, wobei das Kantenband auf mindestens einer seiner beiden Seiten, insbesondere seiner mit einem Werkstoff zu verbindenden Seite, mit einer mittels Energieeintrag aktivierbaren Klebstoffschicht (Kunststoffschicht) beaufschlagt und/oder versehen wird, wobei die mittels Energieeintrag aktivierbare Klebstoffschicht ausgehend von einer Dispersion oder Lösung mindestens eines Klebstoffpolymers in Abwesenheit eines energieabsorbierenden Additivs erhalten wird, wobei das Klebstoffpolymer ausgewählt wird aus Polyvinylacetaten.

15. Kantenband (Kantenstreifen), welches auf mindestens einer Seite eine mittels Energieeintrag aktivierbare Klebstoffschicht (Kunststoffschicht) aufweist und erhältlich ist durch ein Verfahren nach Anspruch 14.

16. Kantenband (Kantenstreifen), welches auf mindestens einer Seite mit einer mittels Energieeintrag aktivierbaren Klebstoffschicht (Kunststoffschicht) beaufschlagt und/oder versehen ist, wobei die mittels Energieeintrag aktivierbare Klebstoffschicht ausgehend von einer Dispersion oder Lösung mindestens eines Klebstoffpolymers in Abwesenheit eines energieabsorbierenden Additivs erhalten ist, wobei das Klebstoffpolymer ausgewählt ist aus Polyvinylacetaten.

17. Verwendung einer Zusammensetzung, insbesondere in Form einer Dispersion oder Lösung mindestens eines Klebstoffpolymers zur Ausrüstung und/oder Beaufschlagung eines Kantenbands (Kantenstreifens) mit einer Klebstoffschicht (Kunststoffschicht), insbesondere zu Zwecken der Anbringung der Kante, insbesondere Kunststoffkante, auf einen Werkstoff mittels Fügen und/oder mittels Verkleben, wobei die Dispersion oder Lösung mindestens ein Klebstoffpolymer, ausgewählt aus Polyvinylacetaten, sowie gegebenenfalls mindestens ein amphoteres Molekül mit hydrophobem und hydrophilem Molekülteil, insbesondere ein Kolloid, vorzugsweise Schutzkolloid, und/oder gegebenenfalls mindestens ein Filmbildungshilfsmittel und/oder einen Filmbildner enthält und frei ist von energieabsorbierenden Additiven, insbesondere frei ist von energieabsorbierenden Pigmenten.

18. Mit einem Kantenband (Kantenstreifen) versehener Werkstoff nach Anspruch 11 oder 12, Verwendung nach Anspruch 13, Verfahren nach Anspruch 14, Kantenband nach Anspruch 15 oder 16 und/oder Verwendung nach Anspruch 17, jeweils **gekennzeichnet durch** eines oder mehrere der Merkmale eines der Ansprüche 1 bis 10.
